(19) Europäisches Patentamt
European Patent Office
Office européen des brevets

(11) Publication number: **0 385 345 B1**

# (12) EUROPEAN PATENT SPECIFICATION

(45) Date of publication of patent specification: **19.04.95**

(51) Int. Cl.[6]: **F16H 3/66**

(21) Application number: **90103696.2**

(22) Date of filing: **26.02.90**

## (54) Planetary gear system.

(30) Priority: **28.02.89 JP 47794/89**
**28.02.89 JP 47795/89**
**28.02.89 JP 47796/89**
**28.02.89 JP 47797/89**

(43) Date of publication of application:
**05.09.90 Bulletin 90/36**

(45) Publication of the grant of the patent:
**19.04.95 Bulletin 95/16**

(84) Designated Contracting States:
**DE GB**

(56) References cited:
**EP-A- 0 041 730**
**GB-A- 2 023 752**
**US-A- 2 871 726**
**US-A- 3 763 719**
**US-A- 4 802 385**
**DE-A- 3 822 319**
**GB-A- 2 062 145**
**US-A- 2 901 923**
**US-A- 3 956 946**

(73) Proprietor: **NISSAN MOTOR CO., LTD.**
**No.2, Takara-cho, Kanagawa-ku**
**Yokohama City (JP)**

(72) Inventor: **Hattori, Noboru**
**No. 2-13 Turugaoka**
**Yokosuka City (JP)**

(74) Representative: **Patentanwälte Grünecker,**
**Kinkeldey, Stockmair & Partner**
**Maximilianstrasse 58**
**D-80538 München (DE)**

**EP 0 385 345 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

## BACKGROUND OF THE INVENTION

The present invention relates to planetary gear systems used in automatic transmissions.

Japanese Patent Provisional (unexamined) Publication No. JP-A-50-64660 (& US-A-3 956 946) discloses one conventional example. The planetary gear system of this conventional example has three single planet type gear sets. The gear train has a first rotary member composed of second and third sun gears, a second rotary member formed by a third carrier, a third rotary member composed of a first ring gear, a second carrier and a third ring gears, a fourth rotary member composed of a second ring gear and a first carrier, and a fifth rotary member formed by a first sun gear. The gear system further includes a connecting means which connects each of input shaft, output shaft, and case (or housing) with one or more of the five rotary members directly or through a selective engaging element such as a clutch or a brake. The input shaft is connected to the fifth, third and first rotary members respectively, through first, second and third clutches. The fifth, fourth and third rotary members are connected with the case through first, second and third brakes. The second rotary member is connected directly to the output shaft. This gear system provides six forward speeds including a direct drive speed, and two reverse speeds by engaging two of the selective engaging elements simultaneously.

This conventional gear system having three planetary gear sets is disadvantageous in the number of component parts, the manufacturing cost and the axial length of the gear train.

A planetary gear system according to the preamble of claim 1 is known from DE-A-3 822 319.

## SUMMARY OF THE INVENTION

It is the object of the present invention, to provide a planetary gear system which can provide many speeds with a compact construction

This object is solved by the subject matter of claim 1.

Preferred embodiments of the invention are subject matter of the subclaims.

## BRIEF DESCRIPTION OF THE DRAWINGS

Figures 1 to 6 are schematic views showing various types of planetary gear trains.

Figures 7 and 8 shows a first embodiment of the invention in skeleton diagram and logic table. respectively.

Figs. 9 and 10 show a second embodiment of the invention in skeleton diagram and logic table.

Figs. 11 and 12 show a third embodiment of the invention in skeleton diagram and logic table.

Fig. 13 shows various types of planetary gear trains each of which uses only one or two pinions in a pinion drive path of each of first and second planetary gear sets.

Figs. 14 and 15 show a fourth embodiment of the invention in skeleton diagram and logic table.

Figs. 16-26 show variations of the fourth embodiment.

Figs. 27, 28 and 29 show a fifth embodiment of the invention in skeleton diagram, speed relationship graph and logic table. Fig. 30 shows the power path of the gear system of the fifth embodiment in each of the reverse, and six forward speeds.

## DETAILED DESCRIPTION OF THE INVENTION

Figs. 1-6 show various planetary gear trains, each of which includes a first planetary gear set PG1 comprising a first ring gear R1 and a first sun gear S1, a second planetary gear set PG2 comprising a second ring gear R2 and a second sun gear S2, and a third equivalent planetary gear set comprising a first ring gear R1, a second ring gear R2 and a common carrier PC. The gear trains are classified into eight categories, herein named SS-S, SS-W, SW-S, WS-S, SW-W, WS-W, WW-S and WW-W, respectively. Each category includes a basic type which is smallest in number of pinions in the category (or whose long pinion is stepless when there are two types having the same minimum number of pinions), and modified types.

In the SS-S category shown in Fig. 1, each of the first, second and third planetary gear sets is restricted by a relationship of a single pinion planetary gear set. In Fig. 1, there are one basic type in the lefthand block of Fig. 1, and three modified types in the righthand block.

The SS-W category shown in Fig. 2 includes one basic type having a stepped long pinion and two modified type. Each of the types of this category has the first and second planetary gear sets PG1 and PG2 which are both restricted by the relationship of a single pinion planetary gear set, and the third equivalent planetary gear set which is restricted by a relationship of a double pinion planetary gear set.

In the SW-S category shown in Fig. 3, the first planetary gear set PG1 and the third equivalent planetary gears set are restricted by the single pinion planetary gear relationship, and the second planetary gear set PG2 is restricted by the double pinion type relationship. Fig. 3 shows one basic type on the left side, and three modified types on the right side.

In the WS-S category, the second planetary gear set PG2 and the third equivalent planetary gear set are restricted by the single pinion type relationship, and the first planetary gear set PG1 is restricted by the double pinion type relationship. Types belonging to this category are not shown because they can be easily obtained by interchanging the positions of the first and second planetary gear sets PG1 and PG2.

Fig. 4 shows the SW-W category in which the first planetary gear set PG1 is restricted by the single pinion type relationship, and the second planetary gear set PG2 and the third equivalent planetary gear set are restricted by the double pinion type relationship. Fig. 10 shows one basic type and two modified type of the SW-W category. The first embodiment shown in Fig. 1 employs the gear train of the SW-W category.

The WS-W category is a category in which the second planetary gear set PG2 is restricted by the single pinion type relationship, and the first planetary gear set PG1 and the third equivalent planetary gear set are restricted by the double pinion type relationship. Basic and modified types (not shown) of the WS-W category are obtained by replacing the first and second gear sets PG1 and PG2 with each other.

Fig. 5 shows one basic type and three modified types of the WW-S category in which the first and second planetary gear sets PG1 and PG2 are restricted by the double pinion type relationship, and the third equivalent planetary gear set is restricted by the single pinion type relationship.

Fig. 6 shows one basic type and four modified types of the WW-W category in which all the first, second and third planetary gear sets are restricted by the double pinion type relationship.

The planetary gear designs of the present invention are advantageous in reduction of manufacturing cost and gear train's axial length, and suitable for satisfying the recent demand for more speeds.

**A FIRST EMBODIMENT** of the present invention is shown in Figs. 7 and 8. The gear train of the third embodiment belongs to the SS-W category.

The planetary gear train of the first embodiment has the first and second ring gears R1 and R2, the first and second sun gears S1 and S2 and the common carrier PC, each of which constitutes a unique one of the five rotary members of the present invention.

The pinion unit of the first embodiment includes one or more pinion groups each of which has first and second short pinions PS1 and PS2, and a long pinion PL. The first short pinion PS1 meshes with both the first ring gear R1 and the first sun gear S1. The second short pinion PS2 meshes with both the second ring gear R2 and the second sun gear S2. The long pinion PL has a first toothed portion meshing with the first short pinion PS1 on the first planetary gear set's side, and a second toothed portion meshing with the second short pinion PS2 on the second planetary gear set's side. The number of teeth of the first portion may be equal to that of the second portion. However, this embodiment employs the stepped long pinion PL in which the number of teeth of one of the first and second toothed portions is different from that of the other. As shown in Fig. 7, the diameter of the second portion is larger than that of the first portion. The pinions are all carried on the common carrier PC.

In the first embodiment, the first rotary member MA comprises the first ring gear R1, the second rotary member MB comprises the first sun gear S1, the third rotary member MC comprises the common carrier PC, the fourth rotary member MD comprises the second ring gear R2, and the fifth rotary member ME comprises the second sun gear S2.

The second rotary member MB of the first sun gear S1 is connected with the input shaft MF by a connecting means which includes a first clutch C1. The third rotary member MC of the common carrier PC is connected with the input shaft MF by a connecting means which includes a second clutch C2. The fifth rotary member ME of the second sun gear S2 is connected with the input shaft MF by a connecting means which includes a third clutch C3. The third rotary member MC is connected to the housing member MH by a connecting means including a first brake B1. The fourth rotary member MD of the second sun gear S2 is connected to the housing member MH by a connecting means including a second brake B2. The fifth rotary member ME is connected to the housing member MH by a connecting means including a third brake B3. The first rotary member MA of the first ring gear R1 is directly connected with the output shaft MG by a connecting means having no selective engaging element.

The transmission shift control unit is connected with the three clutches C1, C2, and C3, and the three brakes B1, B2 and B3, and arranged to produce each speed by engaging two of these six selective engaging elements, as shown in the engagement logic table of Fig. 8. Each shift is accomplished by the minimum number of shift operations to change one engaging element from one state to the other. The planetary gear system of the third embodiment, therefore, can provide five forward speeds and two reverse speeds with fine quality of shifting.

In Fig. 8, the first and second reverse speeds are denoted, respectively, by -1 and -2, and the neutral is denoted by 0. The positive integers are used to denote the forward speeds. Each small circle in Fig. 14 denotes clutch or brake engagement. In the mathematical formulas in Fig. 8, $\alpha_1$ - (alpha 1) is a gear ratio of the number $Zs_1$ of teeth in the first sun gear 1 to the number $Zr_1$ of teeth in the first ring gear R1 ($\alpha_1 = Zs_1/Zr_1$), $\alpha_2$ (alpha 2) is a gear ratio of the number $Zs_2$ of teeth in the second sun gear S2 to the number $Zr_2$ of teeth in the second ring gear.R2 ($\alpha_2 = Zs_2/Zr_2$), and k is a coefficient which is indicative of the relationship between the first ring gear R1 and the second ring gear R2 and which is given by $k = Zr_1 Zp_2/Zr_2 Zp_1$, where $Zp_1$ is the number of teeth in the first portion of the long pinion PL, and $Zp_2$ is the number of teeth in the second portion of the long pinion PL.

In the first embodiment, the rotational speed $Nr_1$ of the first ring gear R1, the rotational speed $Ns_1$ of the first sun gear and the rotational speed Nc of the common carrier PC are constrained by a first single pinion type mathematical relationship of the single pinion planetary gear set which is expressed as;

$$Nr_1 + \alpha_1 Ns_1 = (1 + \alpha_1)N_c \qquad (1S)$$

The rotational speed $Nr_2$ of the second ring gear R2, the rotational speed $Ns_2$ of the second sun gear S2 and the rotational speed Nc of the common carrier PC are constrained by a second single pinion type mathematical relationship of the single pinion planetary gear set which is given by;

$$Nr_2 + \alpha_2 Ns_2 = (1 + \alpha_2)Nc \qquad (2S)$$

The rotational speed $Nr_1$ of the first ring gear R1, the rotational speed $Nr_2$ of the second ring gear R2 and the rotational speed Nc of the common carrier PC are constrained by a third double pinion type mathematical relationship of the double pinion planetary gear set which is given by;

$$Nr_1 - kNr_2 = (1 - k)Nc \qquad (3W)$$

**A SECOND EMBODIMENT** of the present invention is shown in Figs. 9 and 10. In the second embodiment, the first planetary gear set PG1 is restricted by the single pinion planetary gear relationship, and the second planetary gear set PG2 and the third equivalent planetary gear set PG3 comprising the first and second ring gears R1 and R2 and the common carrier PC are restricted by the double pinion planetary gear relationship.

The planetary gear train of the second embodiment has the first and second ring gears R1 and R2, the first and second sun gears S1 and S2, and the common carrier PC as in the preceding embodiment. The pinion unit includes one or more pinion groups each of which includes a first short pinion PS1, a second short pinion PS2 and a stepless long pinion PL. The first short pinion PS1 meshes with both the first ring and sun gears R1 and S1. The second short pinion PS2 meshes with the second ring gear R2. The long pinion PL has a first toothed portion meshing with the first short pinion PS1 in the first planetary gear set PG1, and a second toothed portion meshing with both the second short pinion PS2 and the second sun gear S2. The diameters of the first and second portions of the long pinion PL of the second embodiment are equal to each other.

In the second embodiment, the first rotary member MA comprising the first ring gear R1 is connected to the housing member MH by a connecting means which includes a first brake B1. The second rotary member MB comprising first sun gear S1 is connected with the input shaft MF through a first clutch C1, and with the housing member MH through a second brake B2. The third rotary member MC comprising the common carrier PC is connected with the input shaft MF through a second clutch C2, and with the housing member MH through a third brake B3. The fourth rotary member MD composed of the second ring gear R2 is directly connected with the output shaft MG. The fifth rotary member ME composed of the second sun gear S2 is connected with the input shaft MF through a third clutch C3.

The gear system of the second embodiment produces each speed by engaging two of the six selective engaging elements, and provides five forward speeds and one reverse speed. Each shift is accomplished by the minimum number of engaging elements.

In the second embodiment, the first planetary gear set PG1 is restricted by the first single pinion planetary gear relationship Eq.(1S), and the third equivalent planetary gear set PG3 comprising the first and second ring gears R1 and R2 and the common carrier PC is restricted by the third double pinion planetary gear relationship Eq.(3W). The second planetary gear set PG2 is restricted by the following second double pinion type relationship:

$$Nr_2 - \alpha_2 Ns_2 = (1 - \alpha_2)Nc \qquad (2W)$$

**A THIRD EMBODIMENT** of the present invention is shown in Figs. 11 and 12, which employs the gear train of the WW-S category.

In the third embodiment, the first rotary member MA composed of the first ring gear R1 is directly connected with the output shaft MG. The second rotary member MB composed of the first sun gear S1 is connected with the input shaft MF through a first clutch C1. The third rotary member MC composed of the common carrier PC is connected with the input shaft MF through a second clutch C2, and with the housing member MH through a first brake B1. The fourth rotary member MD composed of the second ring gear R2 is connected with the housing member MH through a second brake B2. The fifth rotary member ME composed of the second sun gear S2 is connected with the input shaft MF through a third clutch C3, and with the housing member MH through a third brake B3.

The pinion unit of the third embodiment has one or more pinion groups each of which includes a first short pinion PS1, a second short pinion PS2 and a stepless long pinion PL. The first short pinion PS1 meshes with the first sun gear S1, and the second short pinion PS2 meshes with the second ring gear R2. The long pinion PL has a first toothed portion meshing with both the first short pinion PS1 and the first ring gear R1, and a second toothed portion meshing with both the second short pinion PS2 and the second sun gear S2. The diameters of the first and second portions are equal to each other.

The gear system of the third embodiment provides five forward speeds and two reverse speeds each of which is obtained by engaging two of the six engaging elements, and accomplishes each gear shift with the high shifting quality.

In the third embodiment, the first planetary gear set PG1 is restricted by a first double pinion type relationship given by:

$$Nr_1 - \alpha_1 Ns_1 = (1 - \alpha_1)Nc \quad (1W)$$

The second planetary gear set PG2 is restricted by the second double pinion type relationship Eq.-(2W). The third equivalent planetary gear set PG3 is restricted by a third single pinion type relationship given by:

$$Nr_1 + kNr_2 = (1 + k)Nc \quad (3S)$$

Fig. 13 shows various planetary gear train types which are advantageous in that the number of pinions of different kinds participating in torque transmission is equal to or smaller than two in each of the first and second planetary gear sets PG1 and PG2. The reduction of the number of pinions contributes to reduction in manufacturing cost, gear noise, efficiency in power transmission and friction.

Fig. 13 shows a pinion set of each of the thirteen gear train types classified into six categories. The pinion set of each type may consist of only one long pinion, or may be a collection of one long pinion and one or more short pinions, as shown in Figs 13. The pinion set of each type contains a first pinion subset serving as a first intermediate gearing means for connecting by gearing the first ring gear R1 and the first sun gear S1 in the first planetary gear set PG1, a second pinion subset serving as a second intermediate gearing means for connecting by gearing the second ring gear R2 and the second sun gear S2 in the second planetary gear set PG2, and a third pinion subset serving as a third intermediate gearing means for connecting by gearing the first and second ring gears R1 and R2. In the basic type of the WW-W category, for example, the pinion set consists of one long pinion and two short pinions, so that the cardinal number of the pinion set is three. In general, the cardinal number (cardinality) of a set is the number of elements of the set. The first subset consists of the long pinion and the first short pinion. The second subset consists of the long pinion and the second short pinion. The third subset consists of the long pinion. In any of the types shown in Fig. 13, the cardinal number of each of the first and second pinion subsets is not greater than two, and the cardinal number of the third subset is not greater than three.

**AN FOURTH EMBODIMENT** of the invention is shown in Fig. 14.

The gear train of the fourth embodiment has the first and second ring gears R1 and R2, the first and second sun gears S1 and S2, and the common carrier PC, as in the preceding embodiments.

The pinion unit of the fourth embodiment has one ore more pinion groups each of which includes first and second short pinions PS1 and PS2, and a stepless long pinion PL. The first short pinion PS1 meshes with the first ring gear R1, and the second short pinion PS2 meshes with the second sun gear S2. The long pinion PL has a first toothed portion which meshes with both the first short pinion PS1 and the first sun gear SL, and a second toothed portion which meshes with both the second ring gear R2 and the second short pinion PS2. The diameter of the first portion is equal to that of the second portion.

The rotary member MC of the common carrier PC is connected with the input shaft MF by a member connecting means which includes a first clutch C1. The rotary member MD of the second ring gear R2 is connected with the input shaft MF by a member connecting means which includes a second clutch C2. The rotary member ME of the second sun gear S2 is connected with the input shaft MF by a member connecting means which includes a third clutch C3. The rotary member MB of the first sun gear S1 is connected with the housing member MH by a member connecting means which includes a first brake B1. The rotary member MC of the common carrier PC is connected with the housing member MH by a member connecting means which includes a second brake B2. The rotary member ME of the second sun gear S2 is connected with the housing member MH by a member connecting means which includes a third brake B3. The rotary member MA of the first ring gear R1 is directly connected with the output member MG in the form of an output shaft by an output member connecting means which includes no selective engaging element.

The output member MG of the fourth embodiment is in the form of a shaft, and arranged in line with the input shaft MF so that the axes of the input and output shafts MF and MG are collinear with each other. The input shaft MF projects in one direction from one end of the gear housing MH, and the output shaft MG projects axially in the opposite direction from the other end of the housing MH. This arrangement is herein called a terminal output arrangement as distinguished from an intermediate output arrangement.

The planetary gear system of the fourth embodiment provides six forward speeds including one direct speed, and one reverse speed by engaging two of the six selective engaging elements with satisfactory shift feeling.

The terminal output arrangement employed in the fourth embodiment is advantageous in that this arrangement is applicable to not only in front engine front drive vehicles but also front engine and rear drive vehicles.

Figs. 16-26 shows various types of the terminal output arrangements which can be employed in the present invention. In these figures, the letters A, B, C, D and E are used to denote, respectively, the first ring gear R1, the first sun gear S1, the common carrier PC, the second ring gear R2 and the second sun gear S2. In the following description, the first member M1 is the input member, the second member M2 is the output member, the third member M3 is the housing member, and the sixth member M6 is the rotary member of the common carrier PC. The four rotary gear members A, B, E and D of the first ring gear R1, the first sun gear S1, the second sun gear S2 and the second ring gear R2 are, respectively, M4, M5, M7 and M8, or M8, M4, M5 and M7, or M7, M8, M4 and M5, or M5, M7, M8 and M4. In other words, any one of the four rotary gear members A, B, E and D is the fourth member M4. The rotary gear member which is next to the fourth member M4 in the order of (A, B, E, D) is the fifth member M5. When the member D is the fourth member M4, then the member A is the fifth member. The rotary gear member which is next to the fifth member M5 in the order is the seventh member M7. When the member D is the fifth member M5, then the member A is the seventh member M7. The rotary gear member next to the seventh member M7 is the eighth member M8. When the member D is the seventh member M7, then the member A is the eighth member M8.

In the four configurations shown in Fig. 16, there are six member connecting means connecting the following six member pairs; M1-M4, M1-M5, M1-M7, M3-M4, M3-M8 and M2-M6. In the configuration shown in the left upper corner in Fig.16, for example, the rotary member B of the first sun gear S1 is the fourth member M4, the rotary member E of the second sun gear S2 is the fifth member M5, the rotary member D of the second ring gear R2 is the seventh member M7, and the rotary member A of the first ring gear R1 is the eighth member M8.

In the four configurations shown in Fig. 17, a connection is made between the two members of each of the six member pairs, M1-M5, M1-M7, M3-M4, M3-M5, M3-M8 an M2-M6. In each configuration shown in Fig. 18, there are provided six connecting means for six member pairs, M1-M5, M1-M7, M1-M6, M3-M4, M3-M6 and M2-M8. In Fig. 19, the connected member pairs are M1-M7, M1-M6, M3-M4, M3-M5, M3-M6 and M2-M8. In Fig. 20, the connected pairs are M1-M4, M1-M5, M1-M7, M1-M6, M3-M4, M3-M6 and M2-M8. In Fig. 21, the connected pairs are M1-M5, M1-M7, M1-M6, M3-M5, M3-M4, M3-M6 and M2-M8. In Fig. 22, the connected pairs are M1-M7, M1-M6, M3-M5, M3-M7, M3-M4, M3-M6 and M2-M8. In Fig. 23, the connected pairs are M1-M4, M1-M5, M1-M7, M3-M4, M3-M6, and M2-M8. In Fig. 24, the connected pairs are M1-M5, M1-M7, M3-M4, M3-M5, M3-M6 and M2-M8. In Fig. 25, the connected pairs are M1-M5, M1-M7, M1-M6, M3-M5, M3-M4 and M2-M8. In Fig. 26, the connected pairs are M1-M7, M1-M6, M3-M5, M3-M4, M3-M7 and M2-M8.

In each of these configurations shown in Figs. 16-26, the output shaft M2 is connected only one rotary member M6 or M8, and there are provided six or seven connecting means. However, it is possible to reduce the number of the connecting means as long as each of the five rotary members is connected at least one of the input, output and housing members.

The gear system of each of these configurations has at least five connecting means each of which connects a unique one of the five rotary members with one of the three external members which are the input, output and housing members. One of the five connecting means is an output connecting means which connects one of the five rotary members with the output member, and the remaining four are input or housing connecting means. At least one connecting means is the input connecting means connecting one rotary member with the input member, and at least one is the housing connecting means connecting one rotary member with the housing member. The output connecting means is disposed between one input connecting means and one housing connecting means. When there are two or more input connecting means, they are arranged consecutively without interposition of any other connecting means. When there are two or more housing connecting means, they are arranged consecutively without interposition of any other connecting means.

Each of the planetary gear system shown in Figs. 16-26 has a member connecting means for connecting each rotary member of a five rotary member set which is a set consisting of the four rotary gear members of the first and second sun gears S1 and S2 and the first and second ring gears R1 and R2, and the rotary carrier member, with at least one of the input, output and housing members. This member connecting means includes an input connecting means which connects the input member with a driving member subset which is a non-null subset of the rotary member set, a housing connecting means which connects the housing member with a held member subset which is a non-null subset of the rotary member set, and an output connecting means which connects the output shaft with a driven member subset which is a non-null subset of the rotary member set. The driven member subset consists of only one rotary member, so that its cardinal number is one. The driven member subset intersects neither the driving member subset, nor the held member subset. That is, there is no rotary member which is in both the driven member subset and the driving member subset, and there is no rotary member which is in both the driven member subset and the held member subset. If the driving member subset includes two or more rotary gear members, then all the rotary gear members of the subset are consecutive in such a cyclic order (an arrangement of cyclic permutation) that the first ring gear member is next to the second ring gear member, the first sun gear member is next to the first ring gear member, the second sun gear member is next to the first sun gear member and the second ring gear member is next to the second sun gear member. Similarly, if the held member subset includes two or more rotary gear members, then all the rotary gear members of the subset are consecutive in the cyclic order. The cardinal number of an intersection of the driving member subset and the held member subset is zero or one, and not greater than one.

In each of the arrangements shown in Fig. 16, the input connecting means connects the input shaft with each rotary gear member of the driving member subset which consists of three rotary gear members which are consecutive in the cyclic order, and the housing connecting means connects the housing member with each rotary gear member of the held member subset which consists of two rotary gear members which are consecutive in the cyclic order. In each of the arrangements shown in Fig. 17, the driving member subset includes two consecutive rotary gear members, and the held member subset includes three consecutive rotary gear members. In each of the arrangements shown in Fig. 18, the driving member subset includes two consecutive rotary gear members, and the held member subset includes only one rotary gear member in addition to the carrier member. In Fig. 19, the driving member subset includes only one rotary gear member, and the held member subset includes two consecutive rotary gear members. In Fig. 20, the driving member subset includes three consecutive rotary gear members, and the held member subset includes only one rotary gear member. In Fig. 21, the driving member subset includes two consecutive rotary gear members, and the held member subset includes two consecutive rotary gear members. In Fig. 22, the driving member subset includes only one rotary gear member, and the held member subset includes three consecutive rotary gear members. In Fig. 23, the driving member subset includes three consecutive rotary gear members, and the held member subset includes only one rotary gear member. In Fig. 24, the driving member subset includes two consecutive rotary gear members, and the held member subset includes two consecutive rotary gear members. In Fig. 25, the driving member subset includes two consecutive rotary gear members and the held member subset includes two consecutive rotary gear members. In Fig. 26, the driving member subset includes only one rotary gear member, and the held member subset includes three consecutive rotary gear members. The single member of the driven member subset is the carrier member C in Figs. 16 and 17, and any one of the four rotary gear members in Figs. 18-26. In Figs. 18-26, the carrier member C is included in both the driving member subset and the held member subset. In Figs. 23-26, the carrier member C is included in either the driving member subset or the held member subset.

**A FIFTH EMBODIMENT** of the invention is shown in Figs. 27-30.

The planetary gear train of the twelfth embodiment has the first and second ring gears R1 and R2, the first and second sun gears S1 and S2, and the common carrier PC, as in the preceding embodiments and their variations.

The pinion unit of the fifth embodiment has one or more pinion groups each of which includes first and second short pinions PS1 and PS2, and a stepless long pinion PL. The pinions are all carried on the common carrier PC. The first pinion PS1 meshes with the first ring gear R1, and the second short pinion PS2 meshes with the second sun gear S2. The long pinion PL has a first toothed portion which meshes with both the first short pinion PS1 and the first sun gear S1, and a second toothed portion which meshes with both the second ring gear S2 and the second short pinion PS2. The diameter of the first portion is equal to the diameter of the second portion.

Each of the five rotary members is connected with at least one of the three external members MF, MG and MH. The gear system of the twelfth embodiment has three input connecting means, three housing connecting means, and one output connecting means.

A first input connecting means connects the input shaft MF with the rotary member MC of the common carrier PC. The first input connecting means includes a high clutch Hi/C (first clutch). The input shaft MF is further connected with the rotary member MD comprising the second ring gear R2 by a second input connecting means which includes an even clutch EVEN/C (second clutch). The input shaft MF is further connected with the rotary member ME of the second sun gear S2 by a third input connecting means which includes a low and reverse clutch L&R/C (third clutch). The third input connecting means further includes a low and reverse one-way clutch L&R/OWC which is connected in series with the low and reverse clutch L&R/C. Therefore, the rotary member ME is connected with the input shaft MF through the series combination of the low and reverse clutch and one-way clutch L&R/C and L&R/OWC.

The stationary housing member MH is connected with the rotary member MA of the first sun gear S1 by a first housing connecting means which includes an underdrive brake UD/B (first brake). The housing member MH is further connected with the rotary member MC of the common carrier PC by a second housing connecting means which includes a reverse brake Rev/B (second brake). The housing member MH is further connected with the rotary member ME of the second sun gear S2 by a third housing connecting means which includes an overdrive brake OD/B (third brake).

The first housing connecting means further includes an underdrive one-way clutch UD/OWC which is connected in series with the underdrive brake UD/B, and an overrun brake OVR/B (fourth brake) which is connected in parallel with the series combination of the underdrive brake UD/B and the underdrive one-way clutch UD/OWC.

The output shaft MG is directly connected with the rotary member MB of the first ring gear R1 by the output connecting means having no selective engaging element. The output shaft MG is in line with the input shaft MF. The arrangement shown in Fig. 27 is a type of the terminal output arrangement.

Oil passages connect the three clutches Hi/C, EVEN/C and L&R/C and the three brakes UD/B, Rev/B and OD/B with the transmission shift control unit (or A/T control unit) which can control the engagement and disengagement of these elements in accordance with the driver's select operation, and one ore more vehicle operating conditions.

The planetary gear system of the fifth embodiment is operated as follows:

As shown in Fig. 28, the shift control unit produces each speed by engaging two elements selected out of the six selective engaging elements Hi/C, EVEN/C, L&R/C, UD/B, Rev/B and OD/B, and thereby imposing two constraint conditions on the planetary gear train.

In the diagram shown in Fig. 28, the positions of the five rotary members MA, MB, MC, MD and ME are assigned along a horizontal axis according to the ratios of the numbers of gear teeth, and the speed ratio (which is a ratio of the rotational speed of each rotary member to the rotational speed of the input member) is expressed along a vertical axis. The clutches are positioned, respectively, at three points at which a horizontal line corresponding to a direct drive speed ratio intersects a vertical line passing through the position of the member MC, a vertical line passing through the position of the member MD and a vertical line passing through the position of the member ME. The brakes are positioned, respectively, at three points at which a horizontal line corresponding to a null speed ratio intersects a vertical line of the member MA, a vertical line of the member MC and a vertical line of the member ME. Straight lines connecting the positions of two of the selective engaging elements are speed relationship lines. A vertical line passing through the position of the member MB directly connected with the output shaft MG intersects the speed relationship line of each speed at a point indicating the reciprocal of the gear ratio of the output shaft MG. By engaging two of the selective engaging elements, the shift control unit can provide three underdrive speeds, two overdrive speeds, and two reverse speeds, as shown by the seven oblique relationship lines. This embodiment, however, employs only one reverse speed shown by a solid line, and does not employ the second reverse speed shown by a broken line in consideration of the gear ratio and the increased member speed

As shown in the logic table of Fig. 29, the gear system of the twelfth embodiment provides six forward speeds including one direct drive speed, and one reverse speed, and achieves a shift from each forward speed to the next higher or lower speed smoothly with a good shift feeling only by changing one selective engaging element from the engaged state to the disengaged state and changing another selective engaging element from the disengaged state to the engaged state.

When a driver's control lever is put in a reverse select position to drive the vehicle backward, the shift control unit engages the low and reverse clutch L&R/C to connect the input shaft MF to the rotary member ME of the second sun gear S2, and engages the reverse brake Rev/B to hold the rotary member MC of the common carrier PC to the housing member MH.

In a drive performance mode in which the input shaft MF drives the planetary gear train, the low and reverse one-way clutch L&R/OWC is put into action, and power is transmitted from the input shaft MF to the output shaft MG through a power path shown by a thick lines and hatched shape in the uppermost skeleton diagram (a) of Fig. 30. In a coast performance mode in which the output shaft MG drives the planetary gear train, the low and reverse one-way clutch L&R/OWC prevents engine braking by freewheeling. In the reverse position, the gear ratio is given by $-k/\alpha_2$.

The neutral position can be obtained by engaging at least one of the brakes UD/B, Rev/B and OD/B. When the control lever is in the neutral select position, however the shift control unit of the twelfth embodiment puts the gear train in neutral by engaging the low and reverse clutch L&R/C in order to reduce the number of the selective engaging elements which must be switched on or off when the control lever is moved between the reverse position and the neutral position, or between the drive position and the neutral position. When the vehicle is coasting with the control lever in the neutral select position, the low and reverse one-way clutch L&R/OWC rotates freely and prevents engine braking.

When the control lever is in one of forward drive positions to select "D" range (automatic shifts up to the sixth speed), "4" range (automatic shifts up to the fourth speed), "3" range (automatic shifts up to the third speed), and "2" range (automatic shifts up to the second speed), the gear system is operated as follows:

The transmission shift control unit produces the first forward speed by engaging the low and reverse clutch L&R/C to drive the rotary member ME of the second sun gear S2, and engaging the underdrive brake UD/B to fix the rotary member MA of the first sun gear S1 to the housing member MH. When the power flow is in the normal direction of drive performance, and the gear system is in the first speed position, the low and reverse one-way clutch L&R/OWC and the underdrive one-way clutch UD/OWC come into operation, and power is transmitted from the input shaft MF to the output shaft MG through a power path shown by thick lines and hatched shapes in (b) of Fig. 46. When the power flow is reverse because of coast performance, the low and reverse one-way clutch L&R/OWC and the underdrive one-way clutch UD/OWC rotate without transmitting torque, and thereby prevent the braking effect of the engine.

In the first speed position within the "4" range or the "3" range, the overrun brake OVR/B is engaged when the throttle opening degree TVO is equal to or smaller than 1/16. In this case, however, the engine brake does not come into operation. In the first speed position of the "2" range, the overrun brake OVR/B is engaged irrespective of the throttle opening degree TVO, but no braking effect of the engine is produced.

The gear ratio of the first speed is $[\alpha_1 k + \alpha_2]$/-$[\alpha_2(1 - \alpha_1)]$.

In the second forward speed, the shift control unit connects the input member MF to the rotary member MD of the second ring gear R2 by engagement of the even clutch EVEN/C, and holds the rotary member MA of the first sun gear S1 to the housing member MH by engagement of the underdrive brake UD/B. Therefore, in the drive performance mode of the normal power flow, power is transmitted from the input shaft MF to the output shaft MG through a power path shown at (c) of Fig. 30, by the aid of the underdrive one-way clutch UD/OWC. During coasting, the underdrive one-way clutch UD/OWC rotates without torque transmission and prevents the engine braking.

When the throttle opening TVO is equal to or smaller than 1/16 in the second speed within the "4" range or the "3" range, the overrun brake OVR/B is engaged, and the engine braking comes into operation. In the second speed position of the "2" range, the overrun brake OVR/B is engaged without regard to the throttle opening, and the engine braking effect is produced.

The gear ratio in the second forward speed is given by $(1 + \alpha_1 k)/(1 - \alpha_1)$.

The shift control unit produces the third forward speed by connecting the input member MF to the rotary member MC of the common carrier PC by engagement of the high clutch Hi/C, and holes the rotary member MA of the first sun gear S1 to the housing member MH by engagement of the underdrive Drake UD/B. The power path is shown at (d) of Fig. 30. The underdrive one-way clutch UD/OWC is in operation during driving with the normal power flow, and prevents the engine braking by idling during coasting with the reverse power flow.

In the third speed position within the "4" range or "3" range, the overrun brake OVR/B is engaged to apply the engine brake when the throttle opening TVO is equal to or smaller than 1/16.

The gear ratio of the third speed is given by 1/-$(1 - \alpha_1)$.

The fourth (direct drive) speed can be obtained by directly connecting the input and output shaft MF and MG by engagement of any two of the clutches Hi/C, EVEN/C and L&R/C. The shift control unit of the twelfth embodiment produces the direct drive speed by engaging the high clutch Hi/C and the even clutch EVEN/C in consideration of the shift quality in 3-4 and 4-5 upshifts and downshifts. The power path in the fourth forward speed is shown at (e) of Fig. 30.

In the fifth forward speed, the high clutch Hi/C makes the driving connecting between the input member MF and the rotary member MC of the common carrier PC, and the overdrive brake OD/B holds (or grounds) the rotary member ME of the second sun gear S2 to the stationary housing member MH. The torque path in the fifth speed is shown at (f) of Fig. 30. The gear ratio is $k/(k + \alpha_2)$.

In the sixth forward speed, the even clutch EVEN/C connects the input shaft MF to the rotary member MD of the second ring gear R2, and the overdrive brake OD/B holds the rotary member ME of the second sun gear S2 to the housing member MH. The torque path is shown at (g) of Fig. 30. The gear ratio is $k(1 - \alpha_2)/(k + \alpha_2)$.

The planetary gear system of the twelfth embodiment has the following advantages. First, this gear system requires only two ring gears and only two sun gears, so that it enables us to reduce the size, weight and manufacturing cost of the gear train. Especially, it is possible to considerably reduce the axial length of the gear train. Second, this gear system can provide six forward speeds and two reverse speeds. When only one reverse speed is employed as in the twelfth embodiment, it is possible to improve the durability of the rotary members. Third, each of the first and second planetary gear sets PG1 and PG2 can transmit torque by using only two pinions meshing with each other, one further meshing with the ring gear, and the other further meshing with the sun gear. Therefore, this gear system can reduce the gear noise and improve the durability of the pinions by restraining the pinion speed from increasing too much. Fourth, the members are connected so that power can be taken out from the end of the transmission case or housing. Therefore, the gear system is applicable to vehicles of various types, including FR vehicles and FF vehicles. Fifth, the low and reverse one-way clutch L&R/OWC connected in series with the low and reverse clutch L&R/C is able to prevent the drivability from being made worse by the braking effect of the engine in the reverse and the first forward speed. Sixth, the arrangement of the underdrive brake UD/B, the underdrive one-way clutch UD/OWC and the overrun brake OVR/B can improve the quality of shifting by providing freewheel shift (or one-way clutch shift) with smooth shift timing especially when the magnitude of transmission torque is great as in shifts between the first and second speeds. Seventh, each speed is obtained by engaging two elements selected among the cluches Hi/C, EVEN/C and L&R/C and the brakes UD/B, Rev/B and OD/B, and each shift from one speed to next is accomplished by using only a small number of selective engaging elements, so that it is easy to mitigate shift shock and improve the quality of shifting.

In the diagram of Fig. 28 the positions of the rotary members along the horizontal line are determined so as to satisfy the following equations; $A/(1 + A) = Zs_1/Zr_1$, $B/(B + C) = Zs_2/Zr_2$ where the ratio of a first horizontal distance between the positions of the members MA and MB to a second horizontal distance between the positions of the members MB and MC is 1:A, the ratio of the first distance to a third distance between the positions of MC and MD is 1:B and the ratio of the first distance to a fourth distance between the positions of MD and ME is 1:C.

## Claims

**1.** A planetary gear system comprising:

first and second ring gears (R1, R2);

first and second sun gears (S1, S2);

first and second planet carriers integrated into a single common planet carrier (PC);

a pinion means (PL, PS1, PS2) comprising a planet pinion set which is a set of planet pinions rotatably mounted on said common carrier, said planet pinion set comprising first and second side pinions which are integrated into a single long pinion (PL), said first ring gear and said first sun gear being geared by a first pinion subset which is a subset of said planet pinion set so that a first planetary gear set (PG1) is formed by said first ring gear, said first sun gear and said first pinion subset, said second ring gear and said second sun gear being geared by a second pinion subset which is a subset of said planet pinion set so that a second planet gear set (PG2) is formed by said second ring gear, said second sun gear and said second pinion subset, said first and second ring gears being geared by a third pinion subset which is a subset of said planet pinion set so that a third planetary gear set is formed by said third pinion subset and said first and second ring gears,

wherein said first ring gear, said first sun gear, said second ring gear, said second sun gear and said common carrier form, respectively, a rotary first ring gear member, a rotary first sun gear member, a rotary second ring gear member, a rotary second sun gear member and a rotary carrier member which are rotatable relative to one another;

wherein said gear system further comprises an input member (IN, MF) for receiving an input rotation, an output member (OUT, MG) for delivering an output rotation, and a stationary housing member (MH);

wherein one of said first and second planetary gear sets is a remote side planetary gear set which is remote from said input member, and the other of said first and second planetary gear sets is an input side planetary gear set which is placed axially between said input member and said remote side planetary gear set;

wherein said gear system further comprising a connecting means (C1~C3, B1~B3, Hi/C, EVEN/C, L&R/C, UD/B, OVR/B, Rev/B, OD/B) for putting said rotary members in an overdrive state to provide an overdrive speed ratio in which an output speed is greater than an input speed by connecting each of said rotary members with one of said input, output and housing member;

wherein one of said first, second and third planetary gear sets is a double pinion type;

wherein one of said first and second ring gears is an output ring gear which is connected with said output member so that they rotate together;

**characterized** in that said planet pinion set comprises an input side short pinion (PS2 in Figs. 13 and 17, PS1 in Figs. 15, 30 and 43) which is in direct engagement with the ring gear of said input side planetary gear.

**2.** A planetary gear system according to Claim 1 wherein said connecting means comprises a carrier driving clutch (C2 in Figs. 13, 15 and 17; C1 in Fig 30; Hi/C in Fig. 43) which is connected between said input member and said common carrier.

**3.** A planetary gear system according to one of Claims 1 and 2 wherein said connecting means comprises a sun gear holding brake (B3 in Fig. 13; B2 in Fig. 15; B3 in Fig. 17; B1, B3 in Fig. 30; OVR/B, UD/B, OD/B in Fig. 43) connected between said stationary member and one of said first and second sun gears.

**4.** A planetary gear system according to one of Claims 1-3 wherein said planet pinion set comprises a remote side short pinion (PS1 in Figs. 13 and 17; PS2 in Figs. 30 and 43) which is in direct engagement with the sun gear of said remote side planetary gear set.

**5.** A planetary gear system according to one of Claims 1-4 wherein the gear size of the ring gear (R2 in Figs. 13 and 17, R1 in Figs. 30, 43) of the input side planetary gear set is greater than that of the ring gear of said remote side planetary gear set.

**6.** A planetary gear system according to one of Claims 4 and 5 wherein each of said first and second planetary gear sets is the double pinion type, and said third planetary gear set is the single pinion type (WW-S type).

**7.** A planetary gear system according to Claim 6 wherein said input side short pinion (PS2 in Fig. 17; PS1 in Figs. 30 and 43) is an outer short pinion which is geared only through said long pinion (PL) with the sun gear of said input side planetary gear set; and said remote side short pinion is an inner short pinion (PS1 in Fig. 17, PS2 in Figs. 30 and 43) which is geared only through said long pinion with the ring gear of said remote side planetary gear set,

**8.** A planetary gear system according to one of Claims 6 and 7 wherein the ring gear (R1 in Figs. 30, 43) of said input side planetary gear set is said output ring gear connected with said output member.

**9.** A planetary gear system according to one of Claims 6-8 wherein said connecting means further comprises a ring gear driving clutch (C2 in Fig. 30, EVEN/C in Fig. 43) connected between said input member and the ring gear (R2) of said remote side planetary gear set (PG2); and a sun gear driving clutch (C3 in Fig. 30; L&R/C in Fig. 43) connected between said input member and the sun gear (S2) of said remote side planetary gear set (PG2).

**10.** A planetary gear system according to one of Claims 1-9 wherein said connecting means comprises a first sun gear holding brake (B1 in Fig. 30; OVR/B, UD/B in Fig. 43) connected between said housing member and said first sun gear, a second sun gear holding brake (B3 in Fig. 30; OD/B) connected between said housing member and said second sun gear, and a carrier holding brake (B2 in Fig. 30; Rev/B) connected between said housing member and said common carrier.

**11.** A planetary gear system according to one of one of Claims 1-3 wherein one of said first and second planetary gear sets (PG1, PG2) is a single pinion type planetary gear set, and said third planetary gear train is a double pinion type planetary gear set (SS-W or SW-W).

**12.** A planetary gear system according to Claim 11 wherein said input side short pinion (PS2 in Fig. 13, PS1 in Fig. 15) is in direct engagement with both of the ring gear and sun gear of said input side planetary gear set, and further in direct engagement with said long pinion (PL), and each of the ring gear and sun gear of said input side planetary gear set is out of direct engagement with the long pinion.

**13.** A planetary gear system according to one of Claims 11 and 12 wherein said connecting means comprises a first sun gear driving clutch (C1 in Figs. 13 and 15) connected between said input member and said first sun gear, a second sun gear driving clutch (C2 in Figs. 13 and 15) connected between said input member and said second sun gear, a ring gear holding brake (B2 in Fig. 13, B1 in Fig. 15) for holding the ring gear which is other than said output ring gear connected with the output member, a carrier holding brake (B1 in Fig. 13; B3 in Fig. 15), and a sun gear holding brake (B3 in Fig. 13; B2 in Fig. 15 for holding the sun gear of said input side planetary gear set.

**14.** A planetary gear system according to one of Claims 11-13 wherein said pinion set comprise a remote side short pinion (PS1 in Fig. 13) which is in direct engagement with both of the ring gear and sun gear of said remote side planetary gear set, and further in direct engagement with said long pinion (PL), and each of the ring gear and sun gear of said remote side planetary gear set is out of direct engagement with the long pinion.

**15.** A planetary gear system according to Claim 14 wherein said long pinion (PL) is a stepped pinion having a larger gear section which is in engagement with said input side short pinion, and a smaller gear section which is in engagement with said remote side short pinion.

**16.** A planetary gear system according to Claim 15 wherein said input side short pinion (PS2 in Fig. 13) is larger in gear size than said remote side short pinion (PS1 in Fig. 13).

**17.** A planetary gear system according to one of Claims 11-13 wherein said planet pinion set comprises a remote side short pinion (PS2 in Fig. 15) which is in direct engagement with each of said long pinion and the ring gear (R2) of said remote side planetary gear set (PG2) and which is geared through said long pinion with the sun gear of said remote side planetary gear set.

## Patentansprüche

**1.** Planetengetriebesystem, das aufweist:
ein erstes und ein zweites Tellerrad (R1, R2);
ein erstes und ein zweites Sonnenrad (S1, S2);
einen ersten und einen zweiten Planetenträger, die in einem einzelnen, gemeinsamen Planetenträger (PC) integriert sind;
eine Ritzeleinrichtung (PL, PS1, PS2), die einen Planetenritzelsatz aufweist, der ein Satz aus Planetenritzeln ist, die drehbar an dem gemeinsamen Träger befestigt sind, wobei der Planetenritzelsatz ein erst- und zweitseitiges Ritzel aufweist, die in einem einzelnen, langen Ritzel (PL) integriert sind, wobei das erste Tellerrad und das erste Sonnenrad durch einen ersten Ritzeluntersatz zahnradmäßig verbunden sind, der ein Untersatz des Planetenritzelsatzes ist, so daß ein erster Planetenritzelsatz (PG1) durch das erste Tellerad, das erste Sonnenrad und den ersten Ritzeluntersatz gebildet ist, wobei das zweite Tellerrad und das zweite Sonnenrad durch einen zweiten Ritzeluntersatz zahnradmäßig verbunden sind, der ein Untersatz des Planetenritzelsatzes ist, so daß ein zweiter Planetengetriebesatz (PG2) durch das zweite Tellerrad, das zweite Sonnenrad und den zweiten Ritzeluntersatz gebildet ist, wobei das erste und das zweite Tellerrad durch einen dritten Ritzeluntersatz zahnradmäßig miteinander verbunden sind, der ein Untersatz des Planetenritzelsatzes ist, so daß ein dritter Planetengetriebesatz durch den dritten Ritzeluntersatz und das erste und das zweite Tellerrad gebildet ist,
wobei das erste Tellerrad, das erste Sonnenrad, das zweite Tellerrad und das zweite Sonnenrad und der gemeinsame Träger jeweils ein erstes Drehtellerradteil, ein erstes Drehsonnenradteil, ein zweites Drehtellerradteil, ein zweites Drehsonnenradteil und ein Drehträgerteil bilden, die drehbar relativ zueinander sind;
wobei das Getriebesystem weiterhin ein Antriebsteil (IN, MF) zur Aufnahme einer Antriebsdrehung, ein Abtriebsteils (OUT, MG) zur Abgabe einer Ausgangsdrehung und ein stationäres Gehäuseteil (MH) aufweist;
wobei einer des ersten und des zweiten Planetengetriebesatzes ein entfernter Seitenplanetengetriebesatz ist, der von dem Antriebsteil entfernt ist, und der andere des ersten und des zweiten Planetengetriebesatzes ein Antriebsseitenplanetengetriebesatz ist, der axial zwischen dem Antriebsteil und dem entfernten Seitenplanetengetriebesatz plaziert ist;
wobei das Getriebesystem weiterhin eine Verbindungseinrichtung (C1-C3, B1-B3, Hi/C, EVEN/C, L&R/C, UD/B, OVR/B, Rev/B, OD/B) zum Überführen der Drehteile in einen Overdrive-Zustand, um ein Overdrive-Geschwindigkeitsverhältnis zu schaffen, indem eine Abtriebsgeschwindigkeit größer als eine Antriebsgeschwindigkeit ist, und zwar durch Verbindung jedes der Drehteile mit einem des Antriebs-, Abtriebs- und Gehäuseteils;
wobei einer des ersten, zweiten und dritten Planetengetriebesatzes ein Doppelritzeltyp ist;
wobei eines des ersten und des zweiten Tellerrads ein Abtriebstellerrad ist, das mit dem Abtriebsteil so verbunden ist, daß sie zusammmen drehen;
dadurch gekennzeichnet, daß der Planetenritzelsatz ein antriebsseitiges, kurzes Ritzel (PS2 in den Fig. 13 und 17, PS1 in den Fig. 15, 30 und 43) aufweist, das in direktem Eingriff mit dem Tellerrad des antriebsseitigen Seitenplanetengetriebesatzes steht.

2. Planetengetriebesystem nach Anspruch 1, wobei die Verbindungseinrichtung eine antreibende Trägerkupplung (C2 in den Fig. 13, 15 und 17; C1 in Fig. 30, Hi/C in Fig. 43) aufweist, die zwischen dem Antriebsteil und dem gemeinsamen Träger verbunden ist.

3. Planetengetriebesystem nach Anspruch 1 und 2, wobei die Verbindungseinrichtung eine Sonnenrad-Haltebremse (B3 in Fig. 13; B2 in Fig. 15; B3 in Fig. 17; B1, B3 in Fig. 30; OVR/B, UD/B, OD/B in Fig.43) aufweist, die zwischen dem stationären Teil und einem des ersten und zweiten Sonnenrad verbunden ist.

4. Planetengetriebesystem nach einem der Ansprüche 1 bis 3, wobei der Planetenritzelsatz ein entferntes, kurzes Seitenritzel (PS1 in den Fig. 13 und 17; PS2 in den Fig. 30 und 43) aufweist, das in direktem Eingriff mit dem Sonnenrad des entfernten Seitenplanetengetriebesatzes steht.

5. Planetengetriebesystem nach einem der Ansprüche 1 bis 4, wobei die Zahnradgröße des Tellerrads (R2 in Fig. 13 und 17, R1 in den Fig. 30, 43) des antriebsseitigen Planetengetriebesatzes größer als diejenige des Tellerrads des entfernten Seitenplanetengetriebesatzes ist.

6. Planetengetriebesystem nach einem der Ansprüche 4 und 5, wobei jeder des ersten und zweiten Planetengetriebesatzes ein Doppelritzeltyp ist und der dritte Planetengetriebesatz ein Einzelritzeltyp (WW-S-Typ) ist.

7. Planetengetriebesystem nach Anspruch 6, wobei das kurze Eingangsseitenritzel (PS2 in Fig. 17; PS1 in den Fig. 30 und 43) ein äußeres, kurzes Ritzel ist, das nur über das lange Ritzel (PL) mit dem Sonnenrad des Antriebsseitenplanetengetriebesatzes zahnradmäßig verbunden ist; und wobei das entfernte, kurze Seitenritzel ein inneres, kurzes Ritzel (PS1 in Fig. 17, PS2 in den Fig. 30 und 43) ist, das nur durch das lange Ritzel mit dem Tellerrad des entfernten Seitenplanetengetriebesatzes zahnradmäßig verbunden ist.

8. Planetengetriebesystem nach einem der Ansprüche 6 und 7, wobei das Tellerrad (R1 in den Fig. 30, 43) des Antriebsseitenplanetengetriebesatzes das Abtriebstellerad ist, das mit dem Abtriebsteil verbunden ist.

9. Planetengetriebesystem nach einem der Ansprüche 6 bis 8, wobei die Verbindungseinrichtung weiterhin eine Tellerradantriebs-Kupplung (C2 in Fig. 30, EVEN/C in Fig. 43) aufweist, die zwischen dem Antriebsteil und dem Tellerrad (R2) des entfernten Seitenplanetengetriebesatzes (PG2) verbunden ist; und eine antreibende Sonnenradkupplung (C3 in Fig. 30; L&R/C in Fig. 43) aufweist, die zwischen dem Antriebsteil und dem Sonnenrad (S2) des entfernten Seitenplanetengetriebesatzes (PG2) verbunden ist.

10. Planetengetriebesystem nach einem der Ansprüche 1 bis 9, wobei die Verbindungseinrichtung eine erste Sonnenradhaltebremse (B1 in Fig. 30; OVR/B, UD/B in Fig. 43), die zwischen dem Gehäuseteil und dem ersten Sonnenrad verbunden ist, eine zweite Sonnenradhaltebremse (B3 in Fig. 30; OD/B), die zwischen dem Gehäuseteil und dem zweiten Sonnenrad verbunden ist, und eine Trägerhaltebremse (B2 in Fig. 30; Rev/B), die zwischen dem Gehäuseteil und dem gemeinsamen Träger verbunden ist, aufweist.

11. Planetengetriebesystem nach einem der Ansprüche 1 bis 3, wobei einer des ersten und zweiten Planetengetriebesatzes (PG1, PG2) ein Einzelritzeltyp-Planetengetriebesatz ist und der dritte Planetengetriebezug ein Doppelritzeltyp-Planetengetriebesatz (SS-W oder SW-W) ist.

12. Planetengetriebesystem nach Anspruch 11, wobei das kurze Antriebsseitenritzel (PS2 in Fig. 13, PS1 in Fig. 15) in direktem Eingriff sowohl mit dem Tellerrad als auch mit dem Sonnenrad des Antriebsseitenplanetengetriebesatzes und weiterhin in direktem Eingriff mit dem langen Ritzel (PL) steht und jedes des Tellerrads und des Sonnenrads des Antriebsseitenplanetengetriebesatzes nicht in direktem Eingriff mit dem langen Ritzel steht.

**13.** Planetengetriebesystem nach einem der Ansprüche 11 und 12, wobei die Verbindungseinrichtung eine erste Sonnenradantriebskupplung (C1 in den Fig. 13 und 15), die zwischen dem Antriebsteil und dem ersten Sonnenrad verbunden ist, eine zweite Sonnenradantriebskupplung (C2 in den Fig. 13 und 15), die zwischen dem Antriebsteil und dem zweiten Sonnenrad verbunden ist, eine Tellerradhaltebremse (B2 in Fig. 13, B1 in Fig. 15) zum Halten des Tellerrads, das ein anderes als das Abtriebstellerrad ist, das mit dem Abtriebsteil verbunden ist, eine Trägerhaltebremse (B1 in Fig. 13; B3 in Fig. 15) und eine Sonnenradhaltebremse (B3 in Fig. 13; B2 in Fig. 15) zum Halten des Sonnenrads des Antriebsseitenplanetengetriebesatzes aufweist.

**14.** Planetengetriebesystem nach einem der Ansprüche 11-13, wobei der Ritzelsatz ein entferntes kurzes Seitenritzel (PS1 in Fig. 13) aufweist, das in direktem Eingriff mit sowohl dem Tellerrad als auch dem Sonnenrad des entfernten Seitenplanetengetriebesatzes und weiterhin in direktem Eingriff mit dem langen Ritzel (PL) steht, wobei jedes des Tellerrads und des Sonnenrads des entfernten Seitenplanetengetriebesatzes nicht in direktem Eingriff mit dem langen Ritzel steht.

**15.** Planetengetriebesystem nach Anspruch 14, wobei das lange Ritzel (PL) ein abgestuftes Ritzel ist, das einen größeren Zahnradabschnitt besitzt, der mit dem kurzen Antriebsseitenritzel in Eingriff steht, und einen kleineren Zahnradabschnitt besitzt, der mit dem entfernten, kurzen Seitenritzel in Eingriff steht.

**16.** Planetengetriebesystem nach Anspruch 15, wobei das kurze Antriebsseitenritzel (PS2 in Fig. 13) in seiner Zahnradgröße größer als das entfernte, kurze Seitenritzel (PS1 in Fig. 13) ist.

**17.** Planetengetriebesystem nach einem der Ansprüche 11-13, wobei der Planetenritzelsatz ein entferntes, kurzes Seitenritzel (PS2 in Fig.15) aufweist, das in direktem Eingriff mit jedem des langen Ritzels und des Tellerrads (R2) des entfernten Seitenplanetengetriebesatzes (PG2) steht und das über das lange Ritzel mit dem Sonnenrad des entfernten Seitenplanetengetriebesatzes zahnradmäßig verbunden ist.

## Revendications

**1.** Système de transmission à trains épicycloïdaux comprenant :

des première et deuxième couronnes dentées (R1, R2);

des premier et deuxième pignons solaires (S1, S2);

des premier et deuxième porte-satellites intégrés en un seul porte-satellite commun (PC);

un moyen de pignons (PL, PS1, PS2) comprenant un ensemble de pignons satellites qui est un ensemble de pignons satellites montés à rotation sur lesdits porteurs communs, ledit ensemble de pignons satellites comprenant des premier et deuxième pignons latéraux qui sont intégrés en un seul pignon long (PL), ladite première couronne dentée et ledit premier pignon solaire engrenant avec un premier sous-ensemble de pignons qui est un sous-ensemble dudit ensemble de pignons satellites de sorte qu'un premier ensemble de transmission à train épicycloïdal (PG1) est formé par ladite première couronne dentée, ledit premier pignon solaire et ledit premier sous-ensemble de pignons, ladite deuxième couronne dentée et ledit deuxième pignon solaire engrenant avec un deuxième sous-ensemble de pignons qui est un sous-ensemble dudit ensemble de pignons satellites de sorte qu'un deuxième ensemble de transmission à train èpicycloïdal (PG2) est formé par ladite deuxième couronne dentée, ledit deuxième pignon solaire et ledit deuxième sous-ensemble de pignons, lesdites première et deuxième couronnes dentées engrenant avec un troisième sousensemble de pignons qui est un sous-ensemble dudit ensemble de pignons satellites de sorte qu'un troisième ensemble à train épicycloïdal est formé par ledit troisième sous-ensemble de pignons et lesdites première et deuxième couronnes dentées,

dans lequel ladite première couronne dentée, ledit premier pignon solaire, ladite deuxième couronne dentée, ledit deuxième pignon solaire et ledit porteur commun forment, respectivement, un premier élément rotatif de couronne dentée, un premier élément rotatif de pignon solaire, un deuxième élément rotatif de couronne dentée, un deuxième élément rotatif de pignon solaire et un élément porteur rotatif qui peuvent tourner les uns par rapport aux autres;

dans lequel ledit système d'engrenage comprend en outre un élément d'entrée (IN, MF) pour recevoir une rotation d'entrée, un élément de sortie (OUT, MG) pour émettre une rotation de sortie et un élément de boîtier stationnaire (MH);
dans lequel l'un desdits premier et deuxième ensembles à train épicycloïdal est un ensemble à train épicycloïdal au côté éloigné qui est éloigné dudit élément d'entrée, et l'autre desdits premier et deuxième ensembles à train épicycloïdal est un ensemble à train épicycloïdal au côté entrée qui est placé axialement entre ledit élément d'entrée et ledit ensemble à train épicycloïdal au côté éloigné;
dans lequel ledit système d'engrenage comprend en outre un moyen de connexion (C1~C3, B1~B3, Hi/C, EVEN/C, L&R/C, UD/B, OVR/B, Rev/B, OD/B) pour mettre lesdits éléments rotatifs dans un état de surmultiplication afin de réaliser un rapport de vitesse de surmultiplication dans lequel une vitesse de sortie est plus grande qu'une vitesse d'entrée en connectant chacun desdits éléments rotatifs à l'un desdits éléments d'entrée, de sortie et de boîtier;
dans lequel l'un parmi lesdits premier, deuxième et troisième ensembles à train épicycloïdal est un type de pignon double;
dans lequel l'une desdites première et deuxième couronnes dentées est une couronne dentée de sortie qui est reliée audit élément de sortie de façon à tourner ensemble;
caractérisé en ce que ledit ensemble de pignons satellites comprend un pignon court côté entrée (PS2 sur les Figs. 13 et 17, PS1 sur les Figs. 15, 30 et 43) qui est en prise directe avec la couronne dentée de ladite transmission à train épicycloïdal côté entrée.

2. Système de transmission à trains épicycloïdaux selon la revendication 1, dans lequel ledit moyen de connexion comprend un embrayage menant porteur (C2 sur les Figs. 13, 15 et 17; C1 sur la Fig. 30; Hi/C sur la Fig. 43) qui est connecté entre ledit élément d'entrée et ledit porteur commun.

3. Système de transmission à trains épicycloïdaux selon l'une des revendications 1 et 2, dans lequel ledit moyen de connexion comprend un frein de retenue de pignon solaire (B3 sur la Fig. 13; B2 sur la Fig. 15; B3 sur la Fig. 17; B1, B3 sur la Fig. 30; OVR/B, UD/B, OD/B sur la Fig. 43) connecté entre ledit élément stationnaire et l'un desdits premier et deuxième pignons solaires.

4. Système de transmission à trains épicycloïdaux selon l'une des revendications 1 à 3, dans lequel ledit ensemble de pignons satellites comprend un pignon court côté éloigné (PS1 sur les Figs. 13 et 17; PS2 sur les Figs. 30 et 43) qui est en prise directe avec le pignon solaire dudit ensemble à train épicycloïdal côté éloigné.

5. Système de transmission à trains épicycloïdaux selon l'une des revendications 1 à 4, dans lequel la taille de couronne de la couronne dentée (R2 sur les Figs. 13 et 17, R1 sur les Figs. 30, 43) de l'ensemble à train épicycloïdal côté entrée est plus grande que celle de la couronne dentée dudit ensemble à train épicycloïdal côté éloigné.

6. Système de transmission à trains épicycloïdaux selon l'une des revendications 4 et 5, dans lequel chacun desdits premier et deuxième ensembles à train épicycloïdal est du type à pignon double, et ledit troisième ensemble à train épicycloïdal est du type à pignon unique (type WW-S).

7. Système de transmission à trains épicycloïdaux selon la revendication 6, dans lequel ledit pignon court côté entrée (PS2 sur la Fig. 17; PS1 sur les Figs. 30 et 43) est un pignon court extérieur qui engrène seulement par ledit pignon long (PL) avec le pignon solaire dudit ensemble à train épicycloïdal côté entrée; et ledit pignon court côté éloigné est un pignon court intérieur (PS1 sur la Fig. 17, PS2 sur les Figs. 30 et 43) qui engrène seulement par ledit pignon long avec le pignon solaire dudit ensemble à train épicycloïdal côté éloigné.

8. Système de transmission à trains épicycloïdaux selon l'une des revendications 6 et 7, dans lequel la couronne dentée (R1 sur les Figs. 30, 43) dudit ensemble à train épicycloïdal côté entrée est ladite couronne dentée de sortie connectée audit élément de sortie.

9. Système de transmission à trains épicycloïdaux selon l'une des revendications 6 à 8, dans lequel ledit moyen de connexion comprend en outre un embrayage menant de couronne dentée (C2 sur la Fig. 30, EVEN/C sur la Fig. 43) connecté entre ledit élément d'entrée et ladite couronne dentée (R2) dudit ensemble à train épicycloïdal côté éloigné (PG2); et un embrayage menant de pignon solaire (C3 sur la Fig. 30; L & R/C sur la Fig. 43) connecté entre ledit élément d'entrée et le pignon solaire (S2) dudit ensemble à train épicycloïdal côté éloigné (PG2).

**10.** Système de transmission à trains épicycloïdaux selon l'une des revendications 1 à 9, dans lequel ledit moyen de connexion comprend un premier frein de retenue de pignon solaire (B1 sur la Fig. 30, OVR/B, UD/B sur la Fig. 43) connecté entre ledit élément de boîtier et ledit premier pignon solaire, un deuxième frein de retenue de pignon solaire (B3 sur la Fig. 30; OD/B) connecté entre ledit élément de boîtier et ledit deuxième pignon solaire, et un frein de retenue de porteur (B2 sur la Fig. 30; Rev/B) connecté entre ledit élément de boîtier et ledit porteur commun.

**11.** Système de transmission à trains épicycloïdaux selon l'une des revendications 1 à 3, dans lequel l'un desdits premier et deuxième ensembles à train épicycloïdal (PG1, PG2) est un ensemble à train épicycloïdal du type à pignon unique, et ladite troisième transmission à train épicycloïdal est un ensemble à train épicycloïdal du type à pignon double (SS-W ou SW-W).

**12.** Système de transmission à trains épicycloïdaux selon la revendication 11, dans lequel ledit pignon court côté entrée (PS2 sur la Fig. 13, PS1 sur la Fig. 15) est en prise directe à la fois avec la couronne dentée et le pignon solaire dudit ensemble à train épicycloïdal côté entrée, et en outre en prise directe avec ledit pignon long (PL) et chacune des couronnes dentées et de pignons solaires dudit ensemble à train épicycloïdal côté entrée n'est pas en prise directe avec le pignon long.

**13.** Système de transmission à trains épicycloïdaux selon l'une des revendications 11 et 12, dans lequel ledit moyen de connexion comprend un premier embrayage menant de pignon solaire (C1 sur les Figs. 13 et 15) connecté entre ledit élément d'entrée et ledit premier pignon solaire, un deuxième embrayage menant de pignon solaire (C2 sur les Figs. 13 et 15) connecté entre ledit élément d'entrée et ledit deuxième pignon solaire, un frein de retenue de couronne dentée (B2 sur la Fig. 13, B1 sur la Fig. 15) pour retenir la couronne dentée qui n'est pas ladite couronne dentée de sortie reliée à l'élément de sortie, un frein de retenue de porteur (B1 sur la Fig. 13; B3 sur la Fig. 15) et un frein de retenue de pignon solaire (B3 sur la Fig. 13; B2 sur la Fig. 15) pour retenir le pignon solaire dudit ensemble à train épicycloïdal côté entrée.

**14.** Système de transmission à trains épicycloïdaux selon l'une des revendications 11 à 13, dans lequel ledit ensemble de pignons comprend un pignon court côté éloigné (PS1 sur la Fig. 13) qui est en prise directe à la fois avec la couronne dentée et le pignon solaire dudit ensemble à train épicycloïdal côté éloigné, et en outre en prise directe avec ledit pignon long (BL), et chacune de la couronne dentée et du pignon solaire dudit ensemble à train épicycloïdal côté éloigné n'est pas en prise directe avec le pignon long.

**15.** Système de transmission à trains épicycloïdaux selon la revendication 14, dans lequel ledit pignon long (PL) est un pignon à gradin ayant une section d'engrenage plus grande qui est en prise avec ledit pignon court côté entrée, et une section d'engrenage plus petite qui est en prise avec ledit pignon court côté éloigné.

**16.** Système de transmission à trains épicycloïdaux selon la revendication 15, dans lequel ledit pignon court côté entrée (PS2 sur la Fig. 13) a une taille d'engrenage plus grande que ledit pignon court côté éloigné (PS1 sur la Fig. 13).

**17.** Système de transmission à trains épicycloïdaux selon l'une des revendications 11 à 13, dans lequel ledit ensemble de pignons satellites comprend un pignon court côté éloigné (PS2 sur la Fig. 15) qui est en prise directe à la fois avec ledit pignon long et la couronne dentée (R2) dudit ensemble à train épicycloïdal côté éloigné (PG2) et qui engrène par ledit pignon long avec le pignon solaire dudit ensemble à train épicycloïdal côté éloigné.

FIG. 1

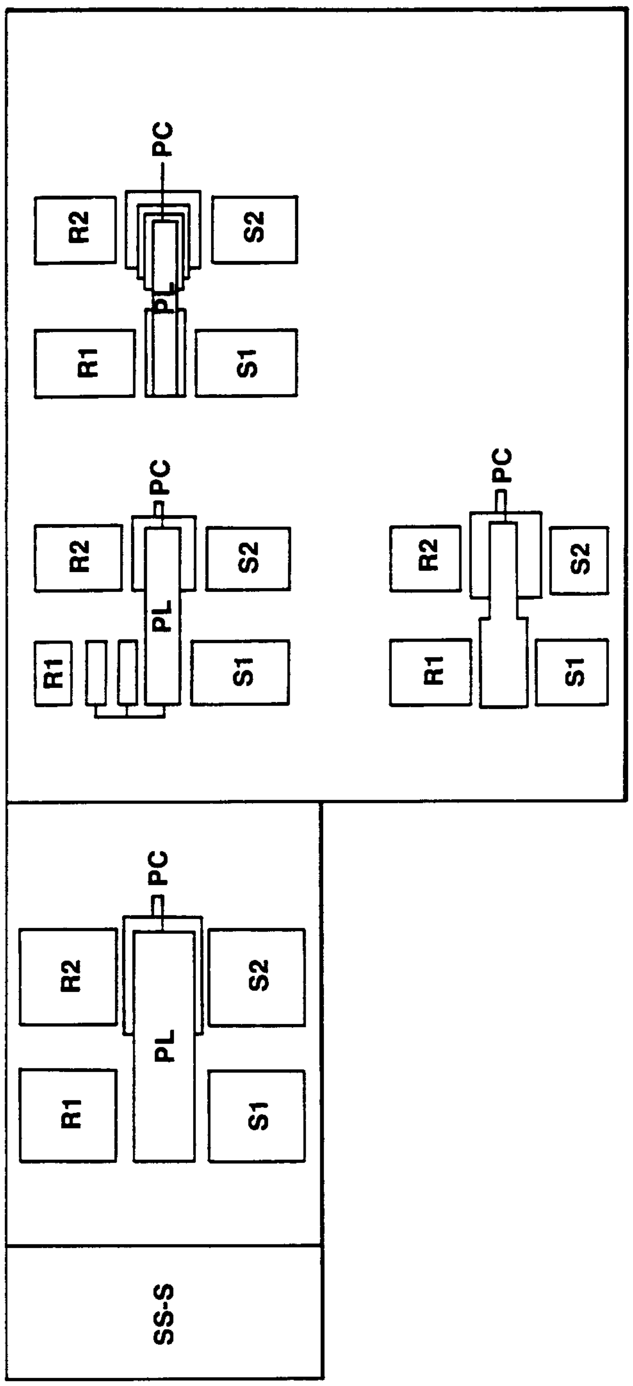


FIG. 2

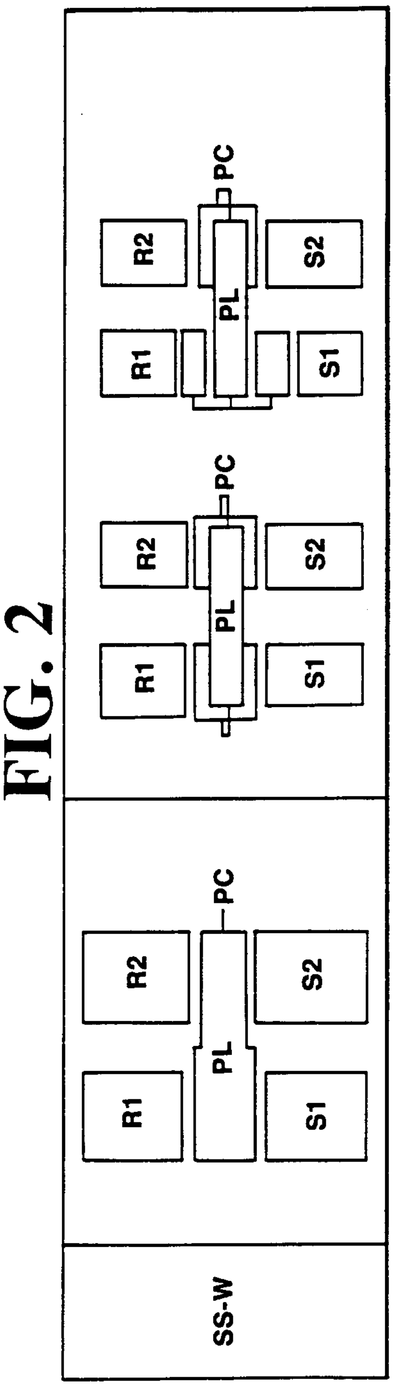

FIG. 3

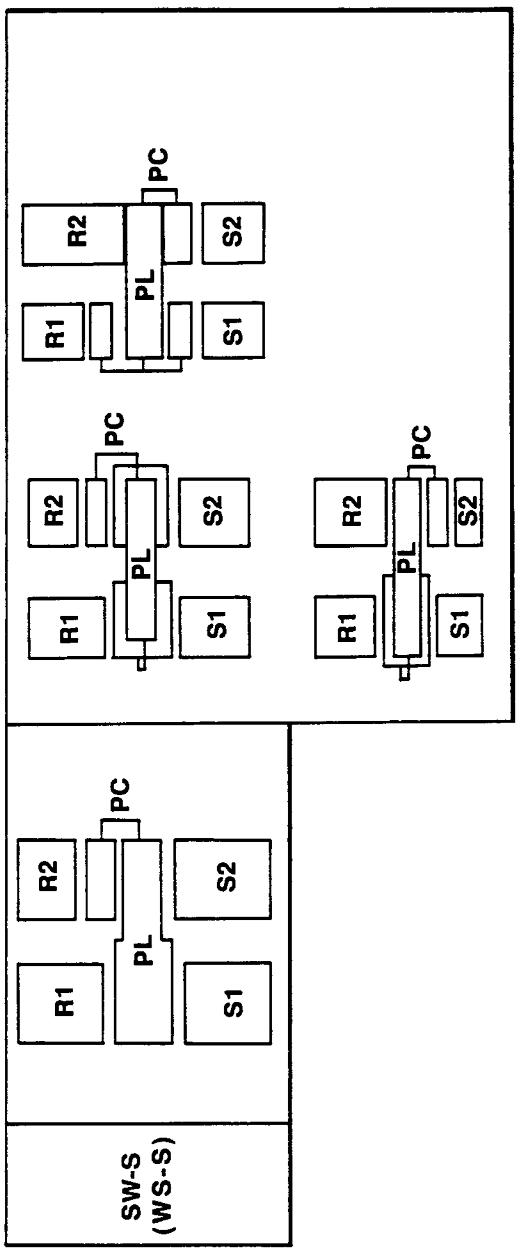


FIG. 4

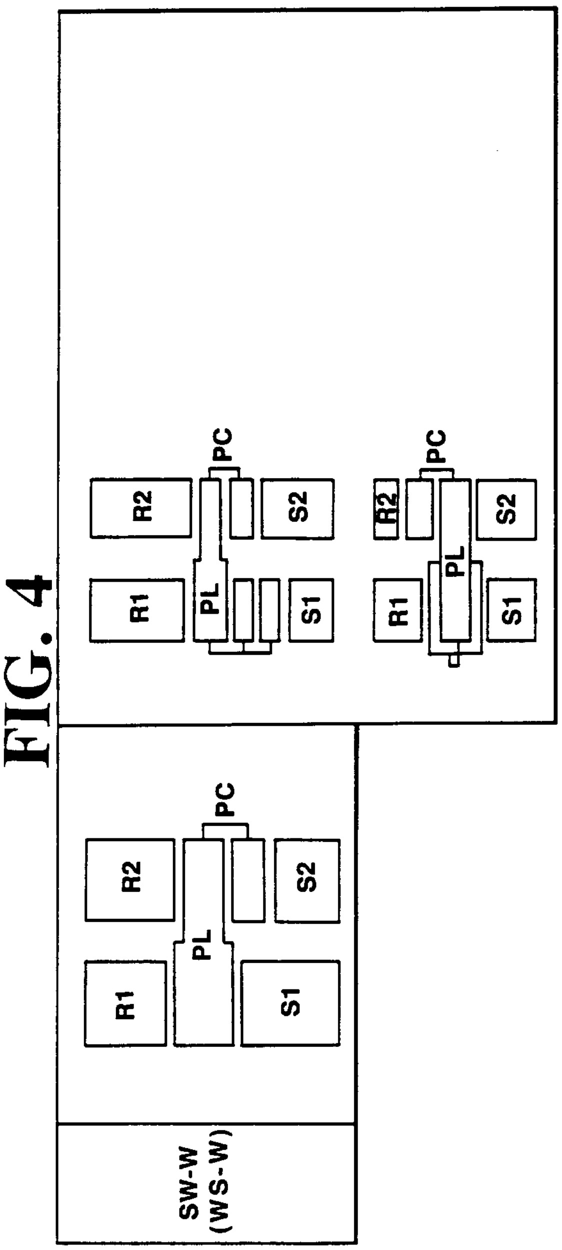

FIG. 5

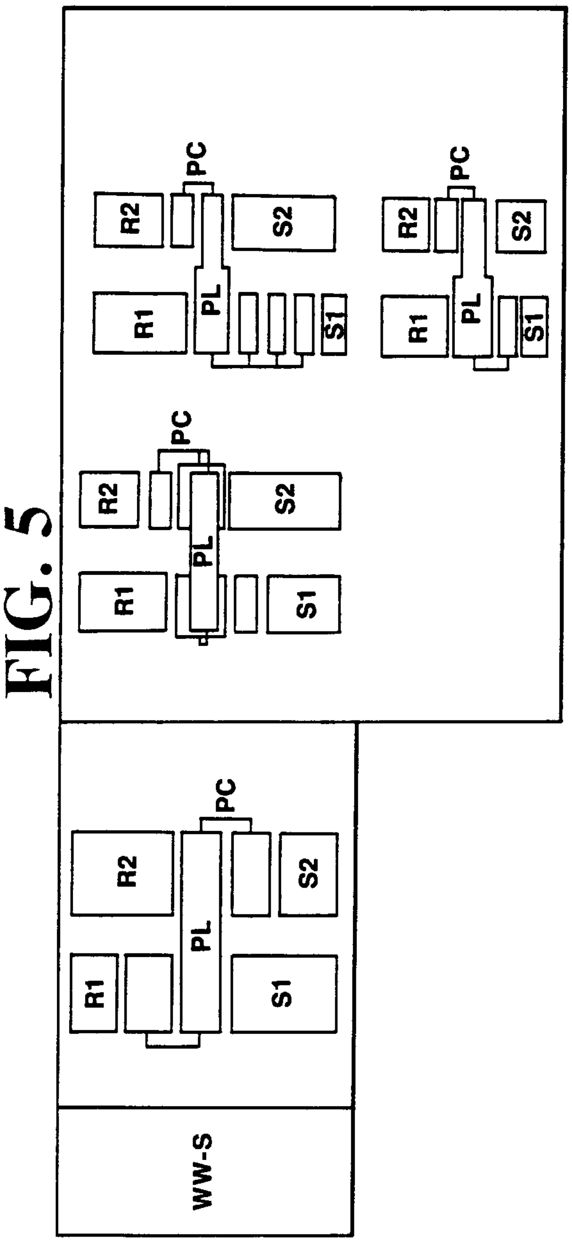


FIG. 6

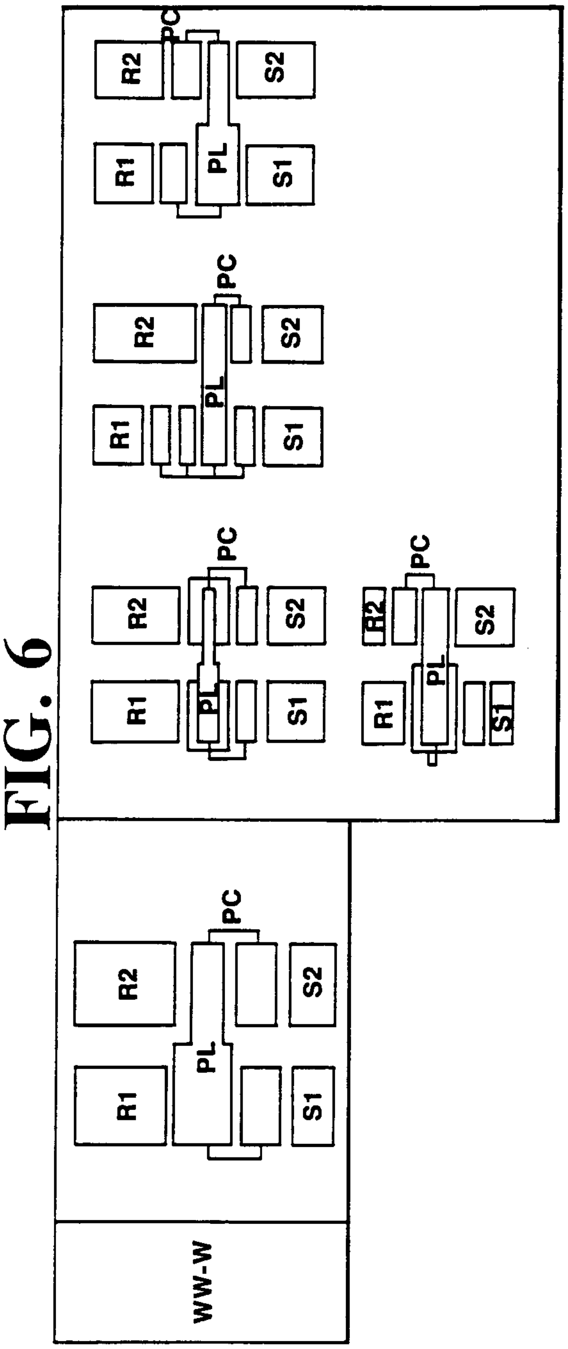

# FIG. 7

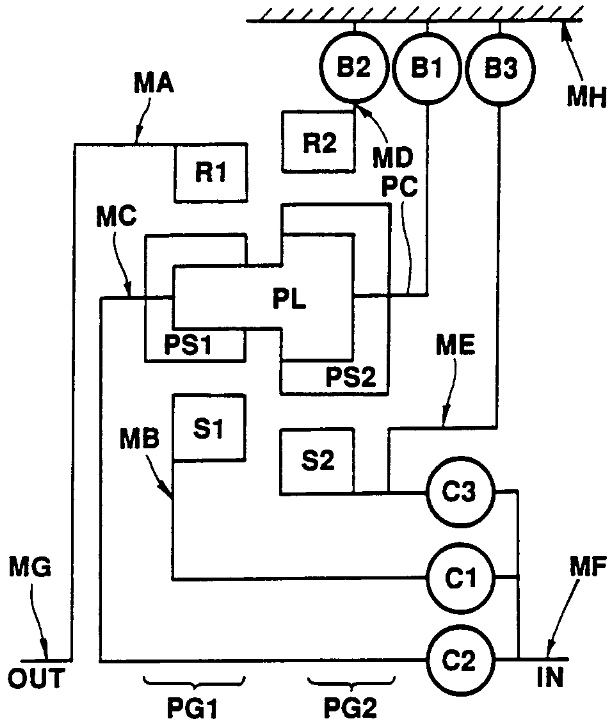


# FIG. 8

| | C1 | C2 | C3 | B1 | B2 | B3 | GEAR RATIO |
|---|---|---|---|---|---|---|---|
| -2 | | | ○ | ○ | | | $-\frac{k}{\alpha 2}$ |
| -1 | ○ | | | ○ | | | $-\frac{1}{\alpha 1}$ |
| 0 | | | | | ○ | | |
| 1 | | | ○ | | ○ | | $\frac{k(1+\alpha 2)}{\alpha 2\,k-1}$ |
| 2 | ○ | | | | ○ | | $\frac{\alpha 1 k+1}{\alpha 1(k-1)}$ |
| 3 | | ○ | | | ○ | | $\frac{k}{k-\alpha 2}$ |
| 4 | ○ | ○ | | | | | 1.00 |
| 5 | | ○ | | | | ○ | $\frac{k}{k+\alpha 2}$ |

# FIG. 9

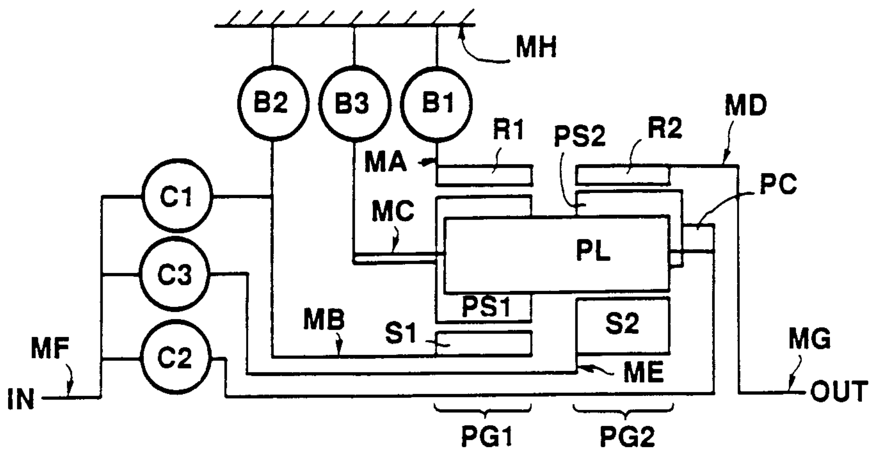


# FIG. 10

| | CLUTCH | | | BRAKE | | | GEAR RATIO |
|---|---|---|---|---|---|---|---|
| | C1 | C2 | C3 | B1 | B2 | B3 | |
| -1 | ○ | | | | | ○ | $-\frac{1}{\alpha 1k}$ |
| 0 | | | | ○ | | | |
| 1 | | | ○ | ○ | | | $\frac{\alpha 2-k}{\alpha 2(k-1)}$ |
| 2 | | | ○ | | | ○ | $\frac{1}{\alpha 2}$ |
| 3 | | | ○ | | ○ | | $\frac{\alpha 2+\alpha 1k}{\alpha 2(1-k)}$ |
| 4 | | ○ | ○ | | | | 1.00 |
| 5 | | ○ | | | ○ | | $\frac{1}{1+\alpha 1k}$ |

# FIG. 11

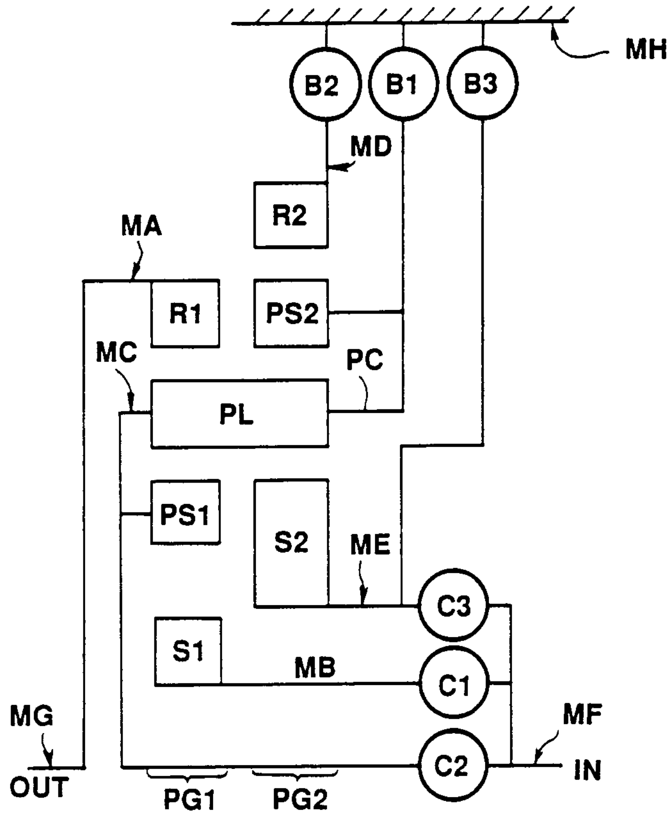


# FIG. 12

| | C1 | C2 | C3 | B1 | B2 | B3 | GEAR RATIO |
|---|---|---|---|---|---|---|---|
| -2 | | | ○ | ○ | | | $-\frac{k}{\alpha 2}$ |
| -1 | | | ○ | | ○ | | $\frac{k(\alpha 2-1)}{\alpha 2\ k+1}$ |
| 0 | | | | ○ | | | |
| 1 | ○ | | | ○ | | | $\frac{1}{\alpha 1}$ |
| 2 | ○ | | | | ○ | | $\frac{\alpha 1 k+1}{\alpha 1(k+1)}$ |
| 3 | ○ | | | | | ○ | $\frac{\alpha 1 k+\alpha 2}{\alpha 1(k+\alpha 2)}$ |
| 4 | ○ | ○ | | | | | 1.00 |
| 5 | | ○ | | | | ○ | $-\frac{k}{k+\alpha 2}$ |

# FIG. 13

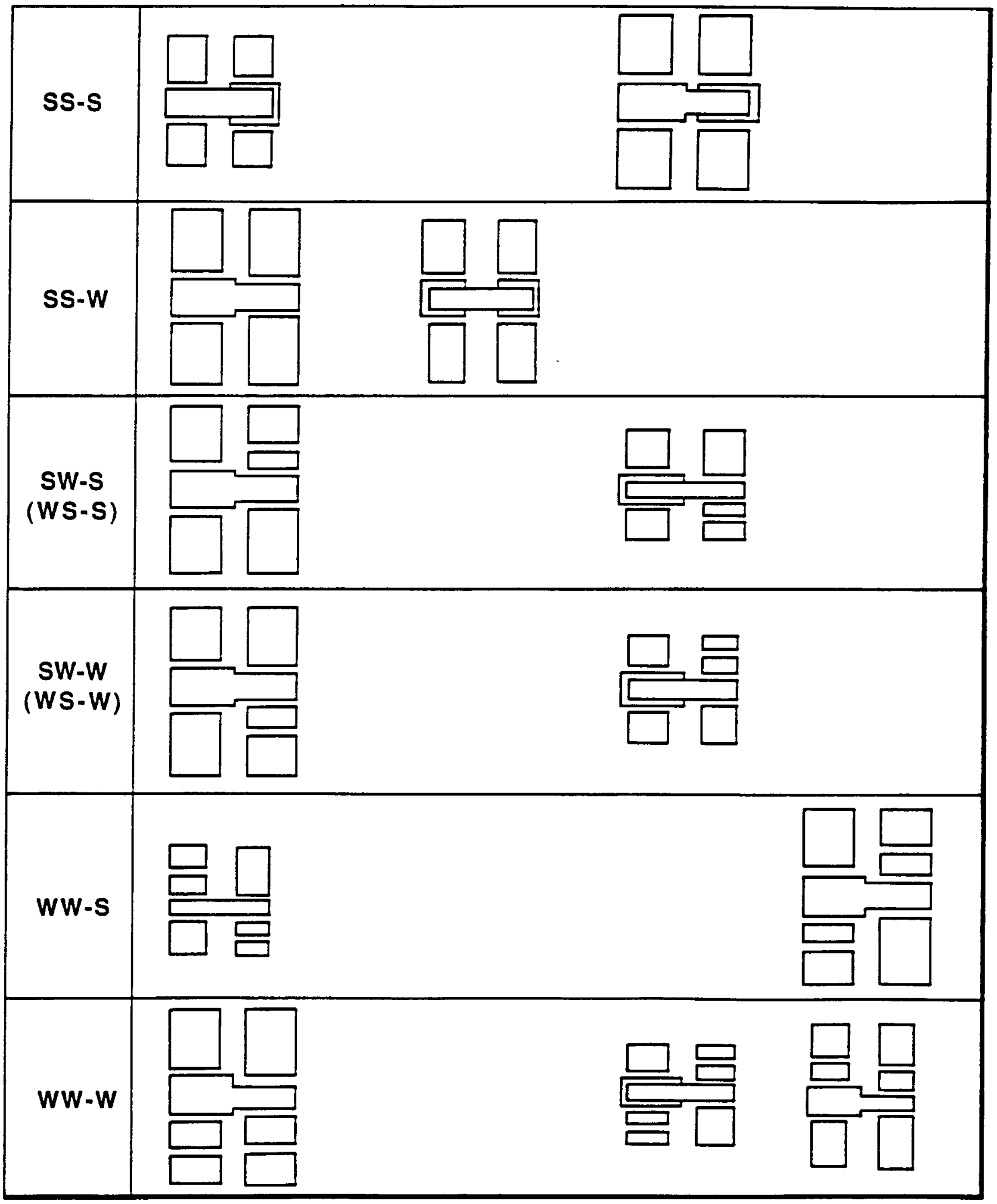

FIG. 14

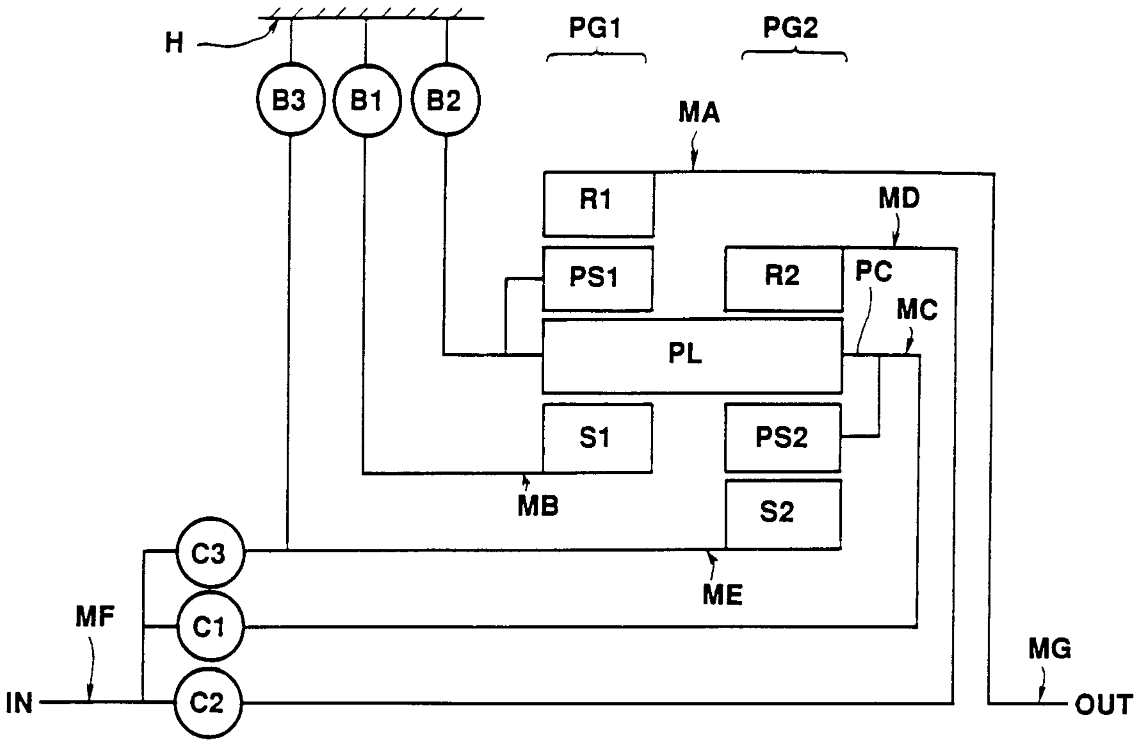


FIG. 15

| | C1 | C2 | C3 | B1 | B2 | B3 | GEAR RATIO |
|---|---|---|---|---|---|---|---|
| REVERSE | | | ○ | | ○ | | $-\frac{k}{\alpha 2}$ |
| NEUTRAL | | | ○ | | | | |
| FORWARD 1ST | | | ○ | ○ | | | $\frac{\alpha 1 k+\alpha 2}{\alpha 2(1-\alpha 1)}$ |
| FORWARD 2ND | | ○ | | ○ | | | $\frac{1+\alpha 1 k}{1-\alpha 1}$ |
| FORWARD 3RD | ○ | | | ○ | | | $\frac{1}{1-\alpha 1}$ |
| FORWARD 4TH | ○ | ○ | | | | | 1.00 |
| FORWARD 5TH | ○ | | | | | ○ | $\frac{k}{k+\alpha 2}$ |
| FORWARD 6TH | | ○ | | | | ○ | $\frac{k(1-\alpha 2)}{k+\alpha 2}$ |

# FIG. 16

| | OUTPUT | INPUT | HOLD | | OUTPUT | INPUT | HOLD |
|---|---|---|---|---|---|---|---|
| 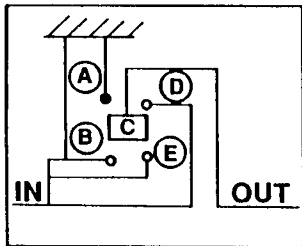  | C | B D E | A B | 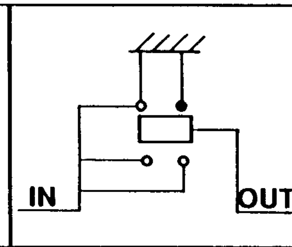  | C | A B E | A D |
| 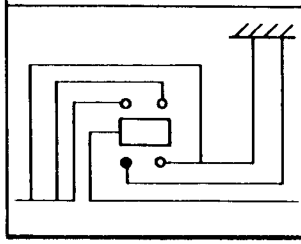 | | A D E | B E | 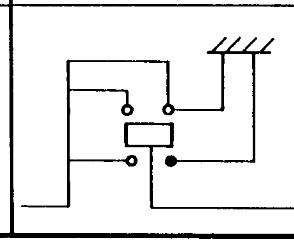 | | A B D | D E |

# FIG. 17

| | OUTPUT | INPUT | HOLD | | OUTPUT | INPUT | HOLD |
|---|---|---|---|---|---|---|---|
| 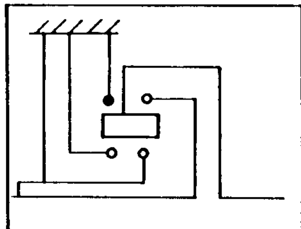 | C | D E | A B E | 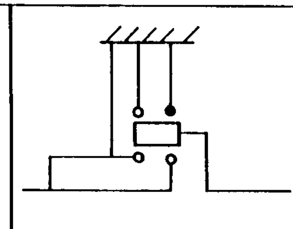 | C | B E | A B D |
| 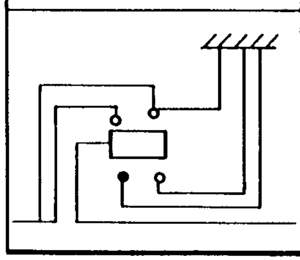 | | A D | B D E | 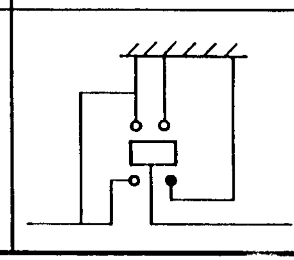 | | A B | A D E |

# FIG. 18

| | OUTPUT | INPUT | HOLD | | OUTPUT | INPUT | HOLD |
|---|---|---|---|---|---|---|---|
| 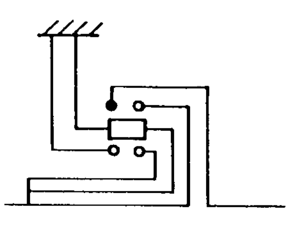 | A | C D E | B C | 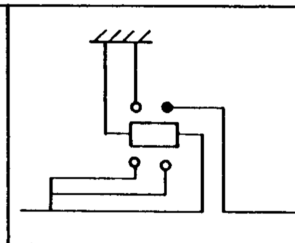 | D | B C E | A C |
| 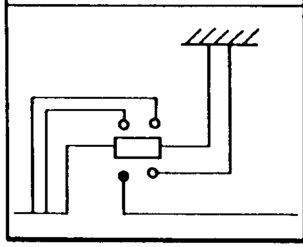 | B | A C D | C E | 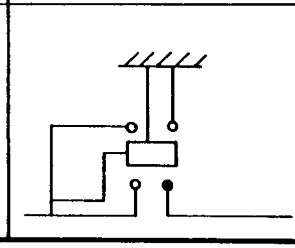 | E | A B C | C D |

# FIG. 19

| | OUTPUT | INPUT | HOLD | | OUTPUT | INPUT | HOLD |
|---|---|---|---|---|---|---|---|
| 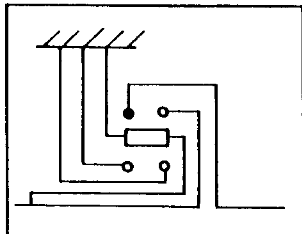 | A | C D | B C E | 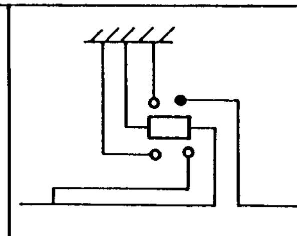 | D | C E | A B C |
| 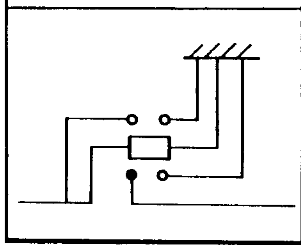 | B | A C | C D E | 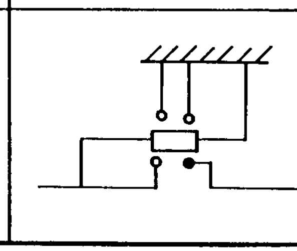 | E | B C | A C D |

# FIG. 20

| | OUTPUT | INPUT | HOLD | | OUTPUT | INPUT | HOLD |
|---|---|---|---|---|---|---|---|
| 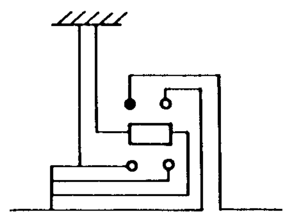 | A | B C D E | B C | 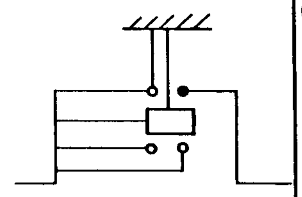 | D | A B C E | A C |
| 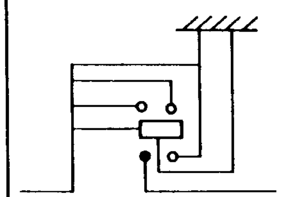 | B | A C D E | C E | 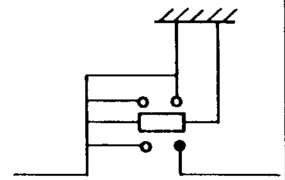 | E | A B C D | C D |

# FIG. 21

| | OUTPUT | INPUT | HOLD | | OUTPUT | INPUT | HOLD |
|---|---|---|---|---|---|---|---|
| 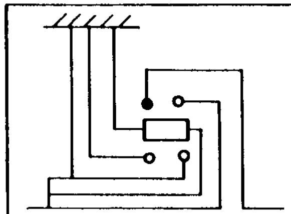 | A | C D E | B C E | 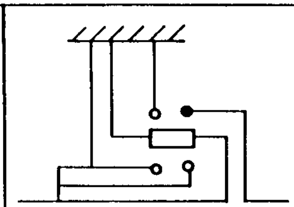 | D | B C E | A B C |
| 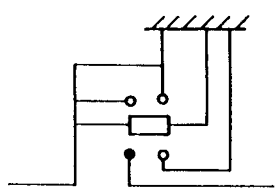 | B | A C D | C D E | 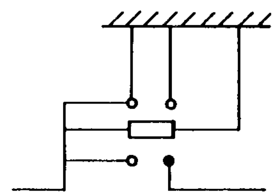 | E | A B C | A C D |

FIG. 22

| | OUTPUT | INPUT | HOLD | | OUTPUT | INPUT | HOLD |
|---|---|---|---|---|---|---|---|
| 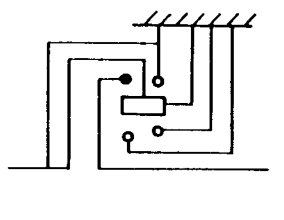 | A | C D | B C D E | 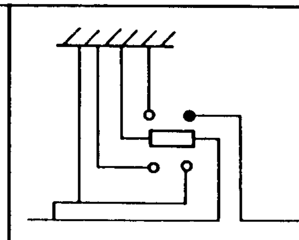 | D | C E | A B C E |
| 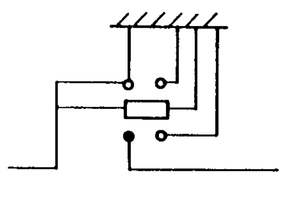 | B | A C | A C D E | 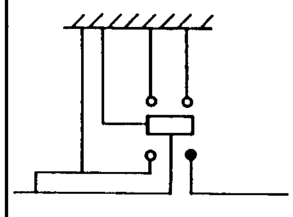 | E | B C | A B C D |

FIG. 23

| | OUTPUT | INPUT | HOLD | | OUTPUT | INPUT | HOLD |
|---|---|---|---|---|---|---|---|
| 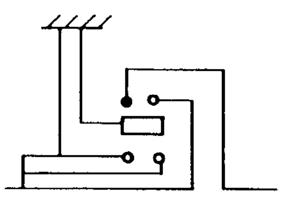 | A | B D E | B C | 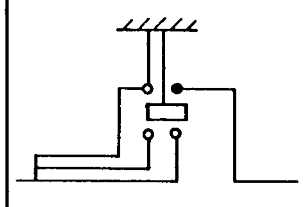 | D | A B E | A C |
| 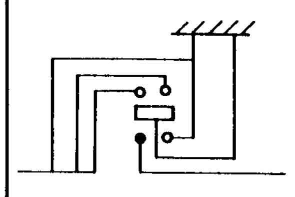 | B | A D E | C E | 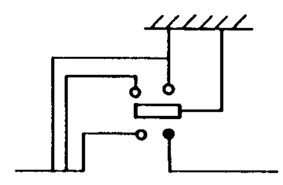 | E | A B D | C D |

# FIG. 24

| | OUTPUT | INPUT | HOLD | | OUTPUT | INPUT | HOLD |
|---|---|---|---|---|---|---|---|
| 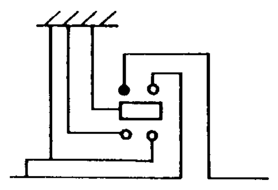 | A | D<br>E | B<br>C<br>E | 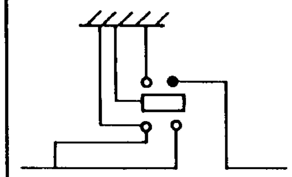 | D | B<br>E | A<br>B<br>C |
| 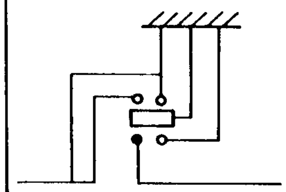 | B | A<br>D | C<br>D<br>E | 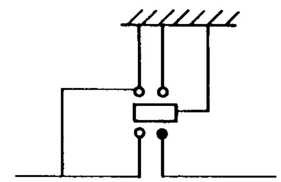 | E | A<br>B | A<br>C<br>D |

# FIG. 25

| | OUTPUT | INPUT | HOLD | | OUTPUT | INPUT | HOLD |
|---|---|---|---|---|---|---|---|
| 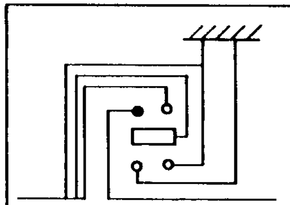 | A | B<br>C<br>D | B<br>E | 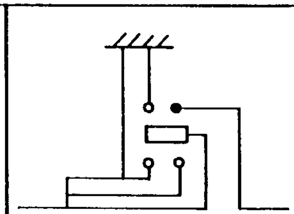 | D | B<br>C<br>E | A<br>B |
| 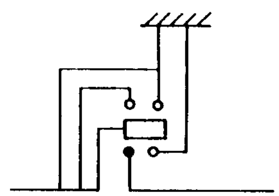 | B | A<br>C<br>D | D<br>E | 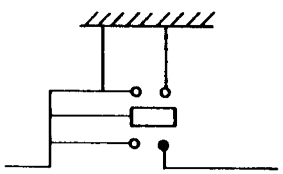 | E | A<br>B<br>C | A<br>D |

# FIG. 26

| | OUTPUT | INPUT | HOLD | | OUTPUT | INPUT | HOLD |
|---|---|---|---|---|---|---|---|
| 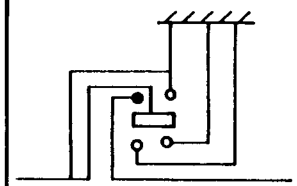 | A | C<br>D | B<br>D<br>E | 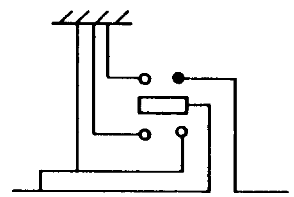 | D | C<br>E | A<br>B<br>E |
| 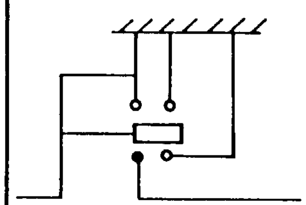 | B | A<br>C | A<br>D<br>E | 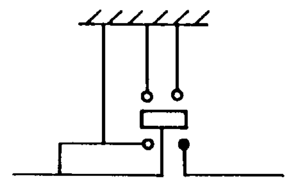 | E | B<br>C | A<br>B<br>D |

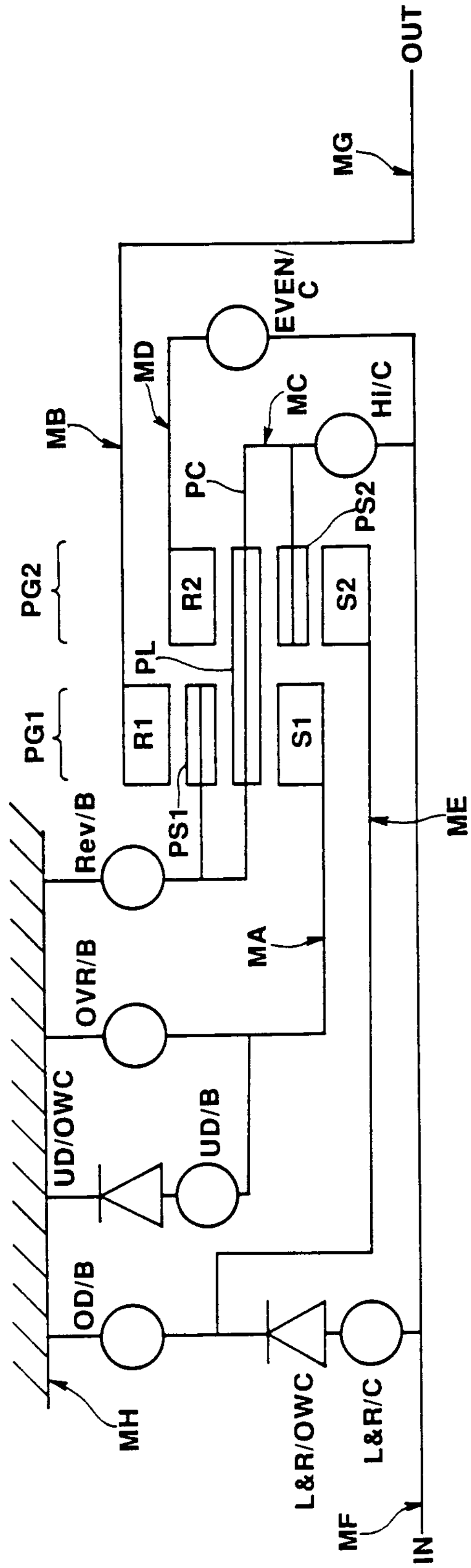
OUT
MG
EVEN/C
MD
MB
MC
HI/C
PC
PS2
PG2
R2
S2
PL
PG1
R1
S1
Rev/B
PS1
ME
MA
OVR/B
UD/OWC
UD/B
OD/B
MH
L&R/OWC
L&R/C
MF
IN

FIG. 27

# FIG. 28

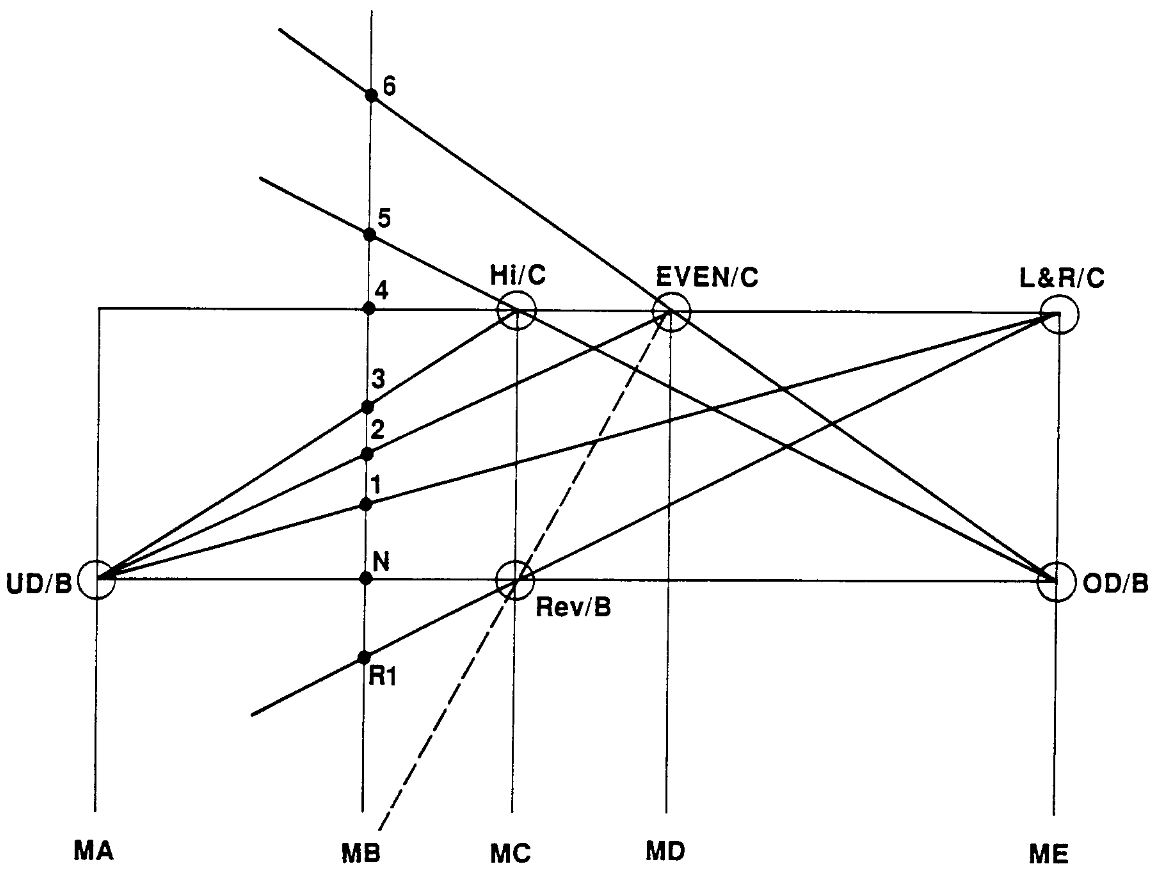

# FIG. 29

| | | Hi/C | EVEN /C | L&R /C | UD /B | OVR /B | Rev /B | OD /B | L&R /OWC | UD /OWC |
|---|---|---|---|---|---|---|---|---|---|---|
| R | | | | ○ | | | ○ | | ⊘ | |
| N | | | | ○ | | | | | ⊘ | |
| D | 1 | | | ○ | ○ | | | | ⊘ | ⊘ |
| | 2 | | ○ | | ○ | | | | | ⊘ |
| | 3 | ○ | | | ○ | | | | | ⊘ |
| | 4 | ○ | ○ | | | | | | | |
| | 5 | ○ | | | | | | ○ | | |
| | 6 | | ○ | | | | | ○ | | |
| 4 | 1 | | | ○ | ○ | (⊗) | | | ⊘ | ⊘ |
| | 2 | | ○ | | ○ | ◎ | | | | ⊘ |
| | 3 | ○ | | | ○ | ◎ | | | | ⊘ |
| | 4 | ○ | ○ | | | | | | | |
| 3 | 1 | | | ○ | ○ | (⊗) | | | ⊘ | ⊘ |
| | 2 | | ○ | | ○ | ◎ | | | | ⊘ |
| | 3 | ○ | | | ○ | ◎ | | | | ⊘ |
| 2 | 1 | | | ○ | ○ | ⊗ | | | ⊘ | ⊘ |
| | 2 | | ○ | | ○ | ○ | | | | ⊘ |

○ ---- ENGAGED

⊘ ---- OPERATED DURING DRIVE

◎ ---- ENGAGED WHEN TVO ≦ 1/16, AND ENGINE BRAKE IS APPLIED

(⊗) ---- ENGAGED WHEN TVO ≦ 1/16, BUT ENGINE BRAKE IS NOT APPLIED

⊗ ---- ENGAGED, BUT ENGINE BRAKE IS NOT APPLIED

# FIG. 30

| | | | |
|---|---|---|---|
| (a) | R | $-\frac{k}{\alpha_2}$ | 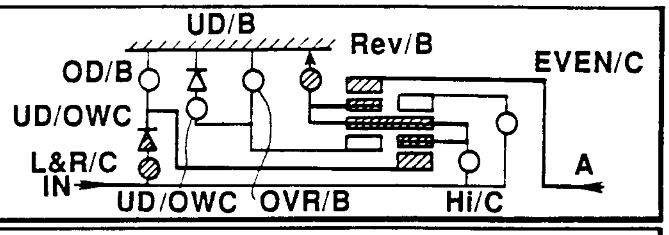 |
| (b) | 1 | $\frac{\alpha_1 k+\alpha_2}{\alpha_2(1-\alpha_1)}$ | 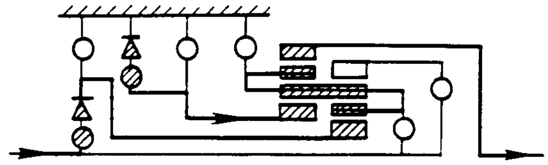 |
| (c) | 2 | $\frac{1+\alpha_1 k}{1-\alpha_1}$ | 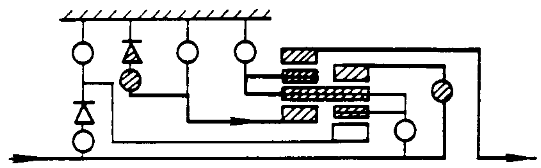 |
| (d) | 3 | $\frac{1}{1-\alpha_1}$ | 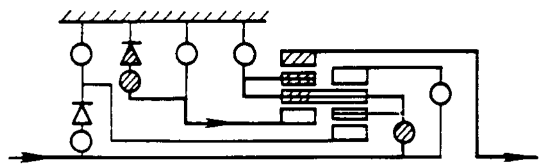 |
| (e) | 4 | 1 | 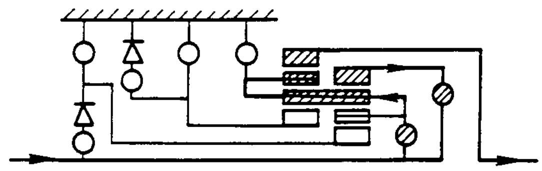 |
| (f) | 5 | $\frac{k}{k+\alpha_2}$ | 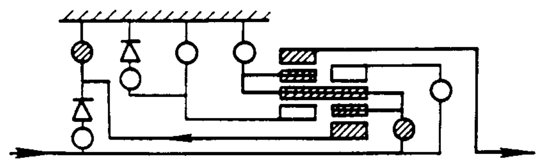 |
| (g) | 6 | $\frac{k(1-\alpha_2)}{k+\alpha_2}$ | 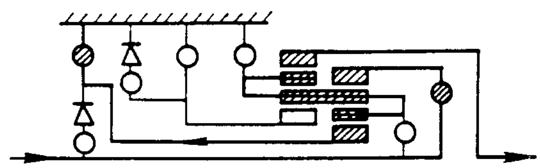 |